Europäisches Patentamt

European Patent Office

Office européen des brevets

(11) Publication number: **0 367 290**
A2

# EUROPEAN PATENT APPLICATION

(21) Application number: 89120405.9

(51) Int. Cl.5 **G06F 3/023**

(22) Date of filing: 03.11.89

(30) Priority: 04.11.88 JP 277250/88

(43) Date of publication of application:
09.05.90 Bulletin 90/19

(84) Designated Contracting States:
DE FR GB IT

(71) Applicant: HITACHI, LTD.
6, Kanda Surugadai 4-chome
Chiyoda-ku Tokyo 101(JP)

Applicant: HITACHI KEIYO ENGINEERING CO.,
LTD.
1-1, Higashinarashino-7-chome
Narashino-shi Chiba-ken(JP)

(72) Inventor: Sakurai, Syunki
Hitachi Shuwaryo 10-1, Shinei-1-chome
Narashino-shi(JP)

(74) Representative: Patentanwälte Beetz sen. -
Beetz jun. Timpe - Siegfried -
Schmitt-Fumian- Mayr
Steinsdorfstrasse 10
D-8000 München 22(DE)

(54) Cursor move control method and apparatus for carrying out the same.

(57) A cursor move control method and an apparatus for carrying out the same. Desired positions on a display screen (3) are registered in a registration table (23). In response to depression of a TAB key or BACK TAB key of a keyboard (1), positional difference between the current position of a cursor and one of the desired positions registered in the registration table is arithmetically determined. The cursor is moved to one of the desired positions from the current position in accordance with the difference.

FIG. 1

## CURSOR MOVE CONTROL METHOD AND APPARATUS FOR CARRYING OUT THE SAME

### BACKGROUND OF THE INVENTION

The present invention generally relates to a method of controlling the move of a cursor on a screen of a display apparatus used in combination with a computer or the like and an apparatus for carrying out the method. More particularly, the present invention relates to a cursor move control method as well as a cursor move control apparatus for use in a document processing system, a drawing system or the like which can be implemented by making use of a computer.

Heretofore, the means for moving a cursor on a display screen of a display apparatus has been generally and conventionally realized by the keys arrayed on a keyboard and labeled with arrows (known as arrow keys or cursor move keys). However, positioning of the cursor at the aimed position on the display screen through operation of the arrow keys requires unexpectedly a lot of time and more or less troublesome manipulation. In particular, when the destination to which the cursor is to be moved is distanced relatively widely from the current position of the cursor, the arrow key(s) must be successively operated or depressed many times in order to move the cursor to the destination.

As the techniques concerning the cursor move control known heretofore, there can be mentioned those disclosed in JP-A-59-135537 and JP-A-60-37029 among others.

According to these known techniques, the cursor on the screen is moved on the display screen from the current position of the cursor to the aimed position or destination by following the shortest path between them in response to actuation of the arrow key(s) by the operator. Consequently, the abovementioned techniques also suffer from the inconvenience that the arrow key(s) has to be successively depressed many times in dependence on the distance intervening between the current cursor position and the destination to which the cursor is to be moved.

As the prior art cursor move control techniques, there may also be mentioned those disclosed in JP-A-60-68375, JP-A-60-117288 and JP-A-61-15189.

### SUMMARY OF THE INVENTION

An object of the present invention is to provide a cursor move control method and an apparatus for carrying out the same which can assure a facilitated operation for moving the cursor from one position to another within a relatively short time, thereby enhancing and improving the manipulatability of the document and/or graphics processing apparatus.

In view of the above and other objects which will be apparent as description proceeds, it is proposed according to an aspect of the present invention that at least one desired position on the screen of a display apparatus used in combination with a document and/or graphics processing apparatus is previously registered in registration means, wherein upon actuation of a predetermined key such as a TAB key or a BACK TAB key, positional difference between the current cursor position and the desired cursor destination (i.e. the position to which the cursor is to be moved) registered in the registration means is arithmetically determined, whereon the cursor is moved from the current position to the desired destination in accordance with or on the basis of the difference thus determined.

Further, according to another aspect of the present invention, pairs of first and second desired positions on the display screen are previously registered in a registration table. In response to the key actuation commanding the move of the cursor, it is detected whether the destination to which the cursor is to be moved coincides with given one of the first positions. When the coincidence is detected, the cursor is moved to the second position which is paired with the first position. In this manner, the cursor having been moved to the first position is automatically moved to the second position in succession.

### BRIEF DESCRIPTION OF THE DRAWINGS

Fig. 1 is a block diagram showing a general arrangement of a data processing apparatus to which the present invention is applied;

Fig. 2 is a view showing an outer appearance of the apparatus shown in Fig. 1;

Fig. 3 is a view for illustrating the move of a cursor according to a first embodiment of the present invention;

Fig. 4A is a flow chart for illustrating a cursor move control method according to the first embodiment of the invention;

Fig. 4B is a schematic diagram for illustrating various areas provided in a RAM (random access memory) incorporated in the data processing apparatus according to the first embodiment;

Fig. 5 is a schematic diagram for illustrating a cursor move procedure for setting tabs according to the first embodiment of the invention;

Fig. 6 is a flow chart for illustrating a tab setting method according to the first embodiment;

Fig. 7 is a block diagram showing a structure of the cursor move control apparatus according to a second embodiment of the present invention;

Fig. 8 is a schematic diagram for illustrating operation of a buffer employed in the first and second embodiments of the present invention;

Fig. 9 is a schematic diagram for illustrating the cursor move procedure according to a third embodiment of the present invention;

Fig. 10A is a flow chart for illustrating the cursor move control method according to the third embodiment of the invention;

Fig. 10B is a schematic diagram showing various areas of a RAM employed in the processing apparatus for carrying out the method according to the third embodiment;

Fig. 11 is a schematic diagram for illustrating a cursor move procedure for setting end/start cursor positions according to the third embodiment of the invention;

Fig. 12 is a flow chart for illustrating the cursor move control method for setting the end/start cursor positions according to the third embodiment;

Fig. 13 is a block diagram showing an arrangement of the cursor move control apparatus according to a fourth embodiment of the present invention;

Fig. 14 is a schematic diagram for illustrating operation of a key buffer employed in the third and fourth embodiments of the invention;

Fig. 15 is a schematic diagram for illustrating a cursor move procedure according to a fifth embodiment of the present invention;

Figs. 16A to 16E are flow charts for illustrating the cursor move control method according to the fifth embodiment of the invention;

Fig. 17 is a schematic diagram for illustrating a cursor move procedure according to a sixth embodiment of the present invention;

Fig. 18 is a schematic diagram for illustrating a cursor move procedure according to a seventh embodiment of the invention;

Fig. 19 is a block diagram showing a general arrangement of the cursor move control apparatus according to an eighth embodiment of the invention;

Fig. 20 is a flow chart for illustrating the cursor move control method according to the eighth embodiment of the invention;

Figs. 21 to 23 are schematic views for illustrating in the manner in which the cursor is moved according to the eighth embodiment of the invention;

Figs. 24 and 25 are schematic diagrams for illustrating relations between translation processing adopted in carrying out the invention and hardware, an operating system and an application program of a data processing apparatus to which the present invention is applied;

Fig. 26 is a block diagram showing a general arrangement of the application program, the operating system and the keybord; and

Fig. 27 shows a modification of the arrangement shown in Fig. 26 to which the translation processing according to the invention is applied.

DESCRIPTION OF THE PREFERRED EMBODIMENTS

Now, the present invention will be described in detail in conjunction with exemplary or preferred embodiments thereof by reference to the accompanying drawings.

First, description will be made of a typical structure of the data processing apparatus to which the invention can be applied.

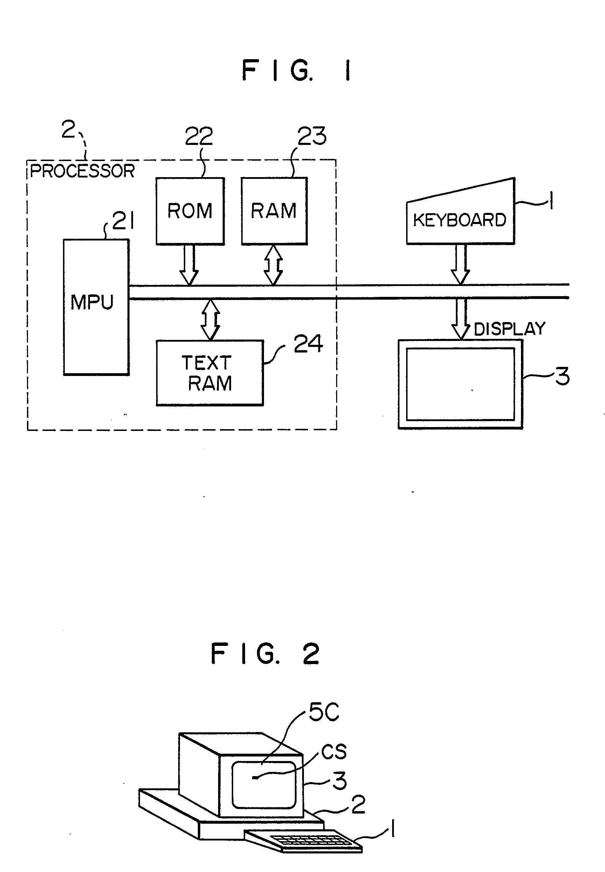

Fig. 1 is a block diagram showing a general arrangement of a data processing apparatus which may be constituted by a relatively small size computer of such species as is generally called the personal computer and to which the present invention is applied, and Fig. 2 is a view showing, by way of example only, an outer appearance of the apparatus shown in Fig. 1. In these figures, reference numeral 1 denotes a keyboard, 2 denotes a processing unit or processor constituting the main part of the data processing apparatus and numeral 3 denotes a display unit. In the key board 1, there are arrayed a multiplicity of keys. By depressing or pressing down the individual keys, corresponding character data are inputted to the processing unit 2 which includes a microprocessor (MPU) 21, a read-only memory (ROM in abbreviation), a read/write memory (or random access memory hereinafter also referred to as RAM) 23 and a read/write memory for storing text information corresponding to the display to be generated on the screen of the display unit 3 (this memory will also be referred to as TEXT RAM) 24. The RAM is implemented in a structure corresponding to that of the display screen (SC) of the display unit 3 in such a manner that the characters written in the TEXT RAM 24 can be displayed at the positions corresponding to the addresses at which the characters are written. The microprocessor (MPU) 21 reads out a program from the ROM or the RAM for executing a predetermined processing in accordance with the program. The results of the processing is displayed on the display unit 3 which is also adapted to display the data inputted with the aid of the keyboard 1. To this end, the display unit 3 has the screen for display, as designated by SC. In the display unit 3, there is displayed on the screen SC a cursor CS which serves to indicate those locations or positions on the screen at which the processing or operation is to be performed.

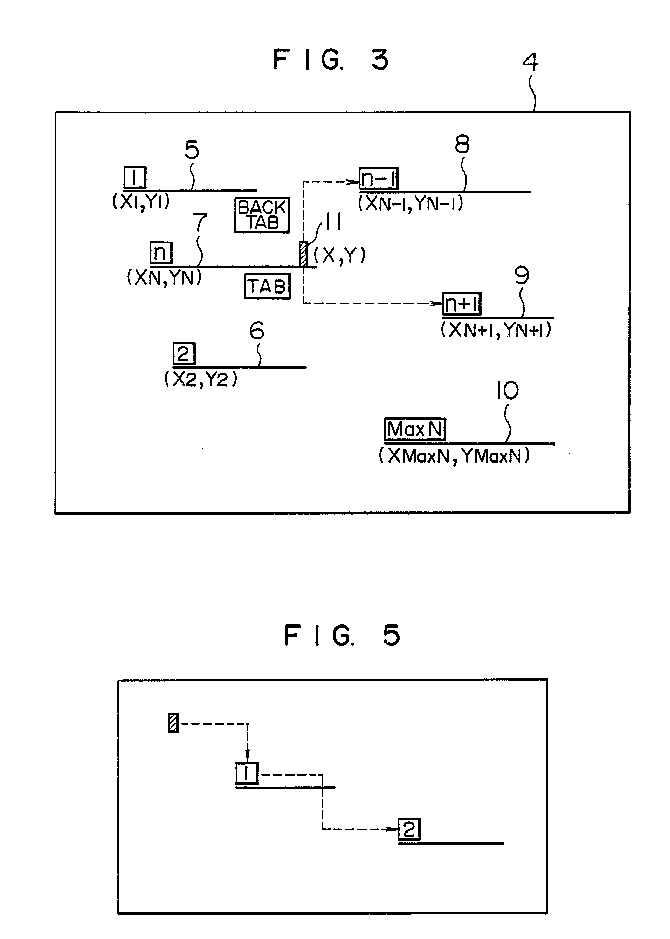

Next, a first embodiment of the present invention will be described by reference to Figs. 3 to 6.

Fig. 3 is a view for illustrating in the manner in which the cursor is moved according to the teaching of the present invention incarnated in the first embodiment. In the figure, reference numeral 4 designates a text displayed on the display screen of the display unit 3 shown in Figs. 1 and 2. This text is assumed to be of a document having a predetermined format such as, for example, a booking slip which is prepared by the operator through operation of the keyboard 1 and stored in the TEXT RAM 24. It is further assumed that this text or document is to be repeatedly reused or issued. Accordingly, sentences of predetermined formulae which can be used in common to all the documents to be issued are inputted once and held constantly. On the other hand, for the character data which differ from one document to another to be outputted, the corresponding regions located above solid line segments designated by 5 to 10, respectively, in Fig. 3 are reserved in blank. After preparation of the document, the operator reads out the relevant text or document information from the TEXT RAM 24 to display it on the screen SC of the display unit 3 and inputs the desired character data in the blank regions one by one while viewing the document being displayed. Manipulation and move of the cursor according to the instant embodiment of the invention is such as follows. It is assumed that the operator has just now completed at a cursor position 11 the inputting of the character data to the blank area or region identified by a reference symbol n enclosed with a rectangle at the left end of the region and depresses a key labeled "TAB" ( also referred to as the TAB key) or a key labeled "BACK TAB" (also referred to as the BACK TAB key). Then, the cursor is automatically moved from the position 11 to the start position of a blank region located above the solid line segment 9 or 8 identified by a reference symbol (n + 1) or (n - 1) enclosed with a rectangle at the lefthand end of the region. The depression of the TAB key makes it possible to input the desired character data sequentially in the individual blank regions in the increasing order of the numerals shown enclosed with the rectangles at the left ends of the blank regions, respectively. On the other hand, when the BACK TAB key is depressed, the character data can be inputted in the blank regions sequentially in the reversed order, i.e. in the decreasing order of the abovementioned numerals.

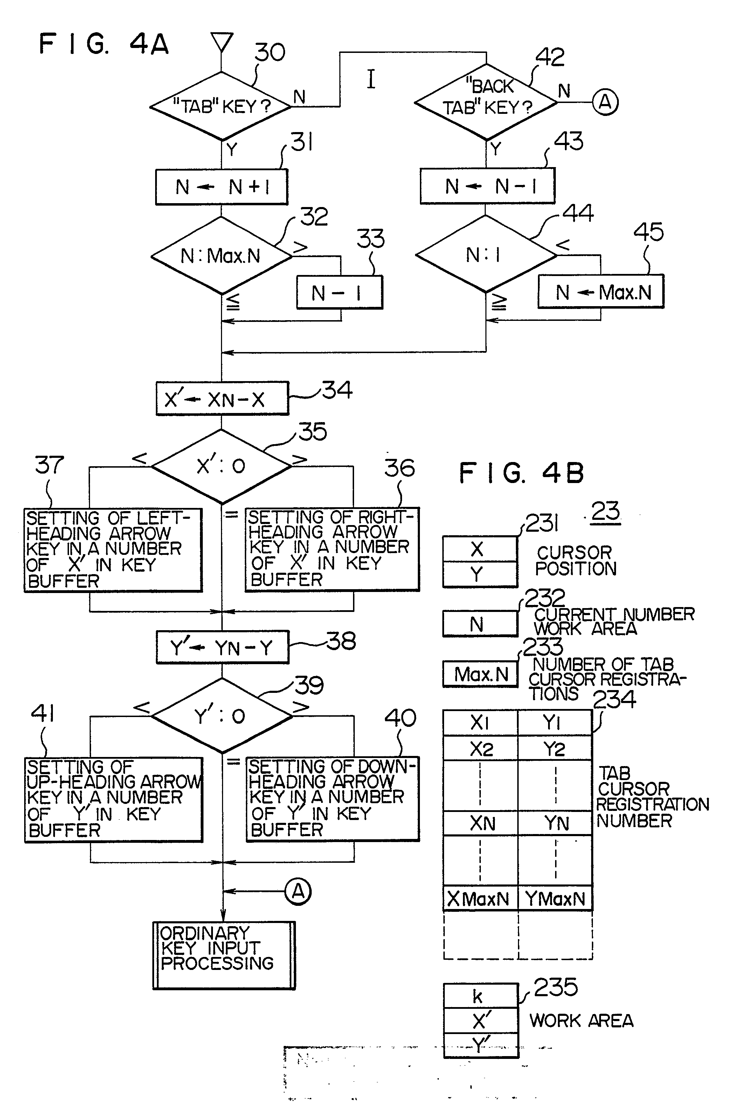

Fig. 4A is a flow chart for illustrating a cursor move control method according to the instant embodiment of the invention, and Fig. 4B is a view showing various areas provided within the RAM 23 incorporated in the processing unit 2 (Fig. 1).

In Fig. 4B, reference numeral 231 designates an area for storing the coordinate values (X, Y) representing the current position of the cursor on an X-Y coordinate system, numeral 232 designates an area for storing the current number (No.) of a variable N, numeral 233 designates an area for storing the maximum value of the variable N, i.e. the number of registrations of the tab cursor, numeral 234 designates a tab cursor registration table area for storing the start positions $(X_n, Y_n$, where N = 1, ...., Max. N) of the individual blank regions, and finally reference numeral 235 designates a work area for the variables $\underline{k}$ and $X'$ and $Y'$ which will be explained in the course of the description which follows.

Now, the cursor move control method according to the first embodiment of the invention will be described by referring to Figs. 4A and 4B.

As a step 30 shown in Fig. 4A, it is decided whether or not the TAB key has been depresses or not. When the result of this decision step 30 is affirmative "Yes" as represented by "Y" in abbreviation, the variable N is incremented by "1" (one) at a step 31. Subsequently, the variable N incremented is compared with the value Max. N representing the number of the tab cursor registrations at a step 32. When the value of the variable N incremented is greater than that of Max. N, the variable N is initialized to 1 at a step 32. On the other hand, when value N is equal to or smaller than Max. N, the X-coordinate value X of the current cursor position is subtracted from the X-coordinate value $X_N$ of the start position corresponding to the value of N resulting from the incrementation, whereon the difference $X'$ resulting from the subtraction is stored in the work area 235. At a step 35, comparison is made between the values $X'$ and 0. When the value $X'$ is greater than 0, i.e. when $X'$ is positive, then a right-heading arrow key is set in a number equal to the value of $X'$ in a key buffer for storing temporarily the character data for display at a step 36. On the other hand, when $X'$ is smaller than 0, i.e. when the former is negative, a left-heading arrow key is set in a number equal to the value of $X'$ in the key buffer at a step 37. Through a routine including steps 38 to 41, the processing similar to the steps 34 to 37 mentioned above is performed for the Y-coordinate value. More specifically, the Y-coordinate value Y of the current cursor position is subtracted from the Y-coordinate value $Y_N$ of the start position corresponding to the value of the variable N incremented at the step 38, whereon the value of difference $Y'$ resulting from the above subtraction is stored in the work area 235 allocated to the value $Y'$. At the step 39, the value $Y'$ is compared with 0.

When the value Y′ is greater than 0, i.e. when Y′ is positive, this means that the destination to which the cursor is to be moved is located below the current cursor position. Accordingly, a down-heading arrow key is set in a number equal to the value of Y′ in the key buffer. On the other hand, when the value Y′ is smaller than 0, i.e. when it is negative, this means that the destination of the cursor to which it is to be moved is located above the current cursor position. Accordingly, an up-heading arrow key is set in a number equal to the value of Y′ in the key buffer. As the result of the processing mentioned above, the cursor is automatically moved on the display screen (SC) from the current position $(X_N, Y_N)$ displayed before operation of the TAB key to the start position $(X_{N+1}, Y_{N+1})$ of the destination blank region. After the move of the cursor, ordinary key input processing can be performed for the blank region into which the cursor has now been moved.

On the other hand, when decision is made at the step 30 that the TAB key is not yet actuated, it is then decided at a step 42 whether or not the BACK TAB key has been depressed. When the answer of the decision step 42 is negative (N), ordinary character data input operation can be performed. However, when it is decided at the step 42 that the BACK TAB key has been operated, the content (N) of the current number (No.) storage area 232 is decremented by "1" at a step 43, being followed by a step 54 at which the decremented value of the variable N is compared with "1". When N is smaller than "1", the maximum value (Max. N) of the variable N is stored in the current number (No.) storage area 232, whereon the processing of the step 34 mentioned previously is executed. In contrast, when the decision step 44 shows that the decremented value of the variable N is equal to or greater than "1", the processing steps 34 to 41 are executed with the content of the current number (No.) storage area 232 being held at (N - 1). Through the operation or procedure mentioned above, the cursor is automatically moved from the current position (XN, YN) occupied by the cursor before actuation of the BACK TAB key to the start position $(X_{N-1}, Y_{N-1})$ of the destination blank region on the display screen.

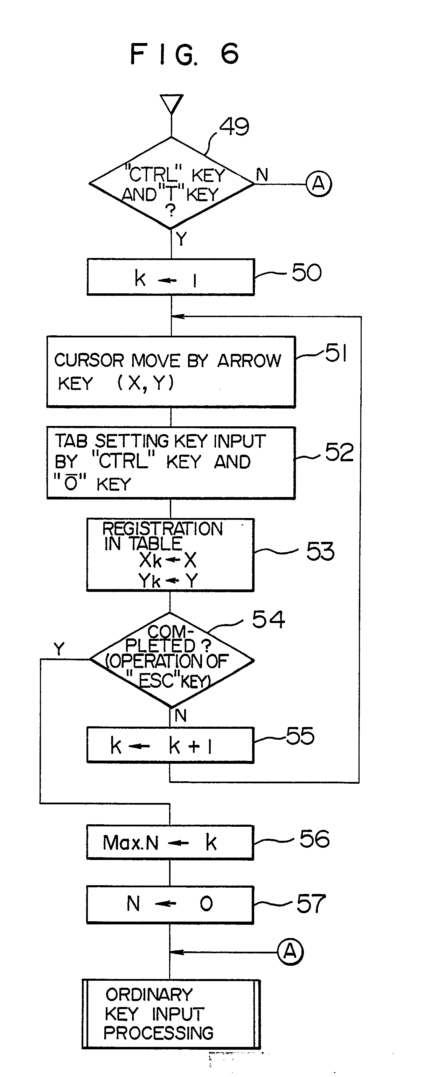

Next, referring to Figs. 5 and 6, a method of setting or positioning tab cursors or tabs will be described. Fig. 5 is a view for illustrating a cursor manipulating procedure for setting the tabs and Fig. 6 is a flow chart for illustrating a tab setting method according to the instant embodiment of the invention.

Referring to Fig. 5, when the tabs are to be set at positions indicated by numerals 1 and 2 each enclosed with a rectangle, the cursor located at the home position is first moved to the position designated by the numeral 1 enclosed with the rectangle by operating correspondingly the keys labeled with the arrow marks. In succession, the tab setting is performed by depressing the associated key or keys to thereby set the tab at the position designated by the numeral 1 enclosed with the rectangle or tetragon. The keys for enabling the tab setting may be, for example, those marked "CTRL (or CONTROL)" and O. By touching these keys with fingers simultaneously, the tab setting can be accomplished. Subsequently, the arrow-marked keys are operated again to thereby move the cursor from the position designated by the numeral 1 enclosed with the tetragon to the position designated by the numeral 2 also enclosed with a tetragon, whereon the tab setting input keys are pressed simultaneously to thereby set the tab at the position designated by the tetragon-enclosed numeral 2.

Referring to the flow chart shown in Fig. 6, a key labeled "CTRL" (abbreviation of CONTROL) and an alphabetic key "T", by way of example, are simultaneously pressed down at a step 50 to initialize a variable k to "1". At a step 51, the cursor is moved to a desired position (X, Y) by means of the arrow-marked keys, whereon the X- and Y-coordinate values are registered in a registration table 234 at an area $(X_1, Y_1)$ by actuating the tab setting input keys at a step 52. The input operation for the tab setting can be achieved by touching simultaneously the keys labeled, for example, "CTRL" and O. Upon completion of the registration of all the desired positions in this manner, a corresponding message is issued to the processing unit 2 (Fig. 1) by actuating, for example, a key labeled "ESC" (an abbreviation of "ESCAPE"). So long as the ESC key remains not actuated, the variable k is incremented by "1" at a step 55, and the step 51 is then regained to register another desired position. When registration of all the desired tab positions has been completed, the ESC key is pressed. Subsequently, the current value of the variable k is stored in the Max. N area 233 at a step 56. Next, at a step 57, the value of N stored in the current number (No.) registration area 232 is initialized to "0". Then, the procedure for registering the desired tab positions comes to an end.

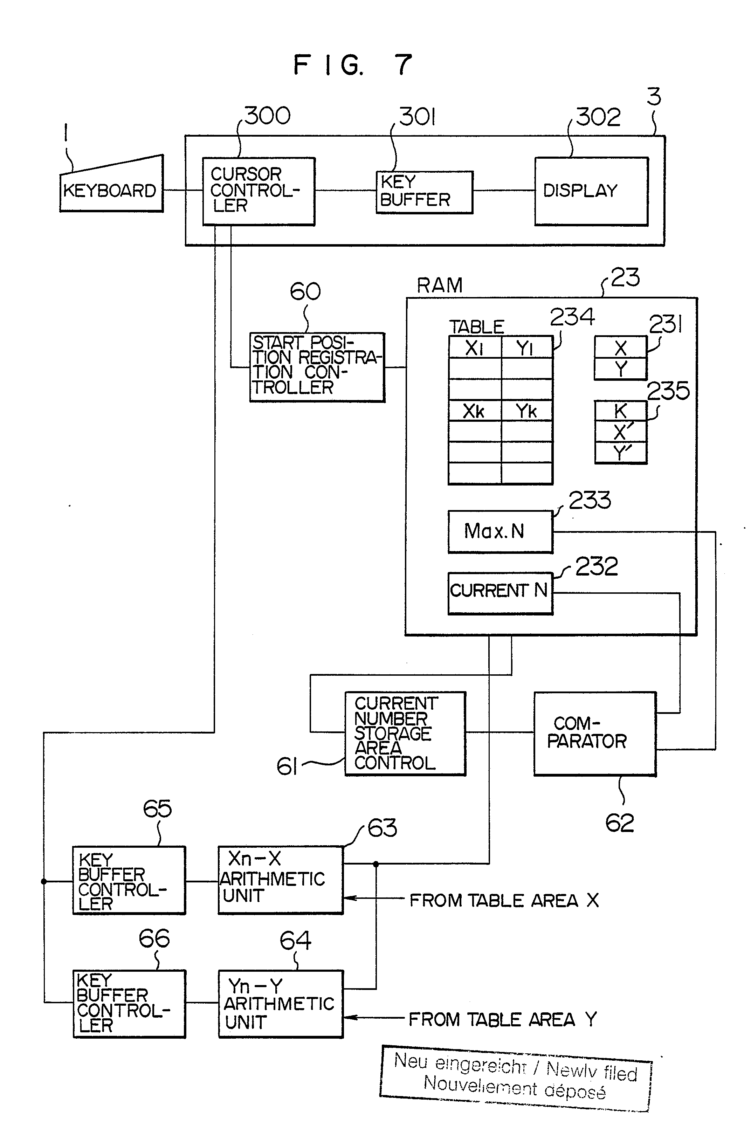

Fig. 7 is a block diagram showing a structure of the cursor move control apparatus according to a second exemplary embodiment of the present invention. The display unit 3 connected to the keyboard 1 is provided with a cursor controller 300, a key buffer 301 and a display device 302. The controller 300 stores sequentially in the key buffer 301 the character strings inputted through the keyboard 1. The display device 302 displays the character data read out from the key buffer 301 sequentially. A start position registration controller 60 executes the processing steps 50 to 57 described above to thereby store the requisite information in the RAM 23 at the areas 231 to 235. The current number (No.) storage area controller 61 serves to increment and decrement the variable N at the steps 31 and 43 as well as for the setting of N at the steps 33 and 45, as described hereinbefore. A comparator 62 serves for comparison between the variable N and the maximum value Max. N thereof and comparison of the variable N with "1". An arithmetic unit 63 performs the calculation of $X_N - X$ at the step 34, while the other arithmetic unit 64 performs the calculation of $Y_N - Y$ at the step 38. A key buffer controller 65 receives the output from the arithmetic unit 63 for executing the processing steps 35 to 37. More specifically, the key buffer controller 65 causes the cursor controller 300 to load the key buffer 301 with the right-heading arrow key data or the left-heading arrow key data representing the number corresponding to the result of the arithmetic operation performed by the arithmetic unit 63. On the other hand, the key buffer controller 66 receives the output from the arithmetic unit 64 to execute the processing steps 39 to 41. More specifically, the key buffer controller 66 causes the cursor controller 300 to store in the key buffer 301 the down-heading arrow key data or the up-heading arrow key data representing the number corresponding to the result of the arithmetic operation performed by the arithmetic unit 64. In the case of the embodiment shown in Fig. 7, the key buffer controllers are provided in a pair. However, it goes without saying that only one key buffer controller may be provided. In that case, the data processing is performed serially in the X- and Y-axial directions, respectively.

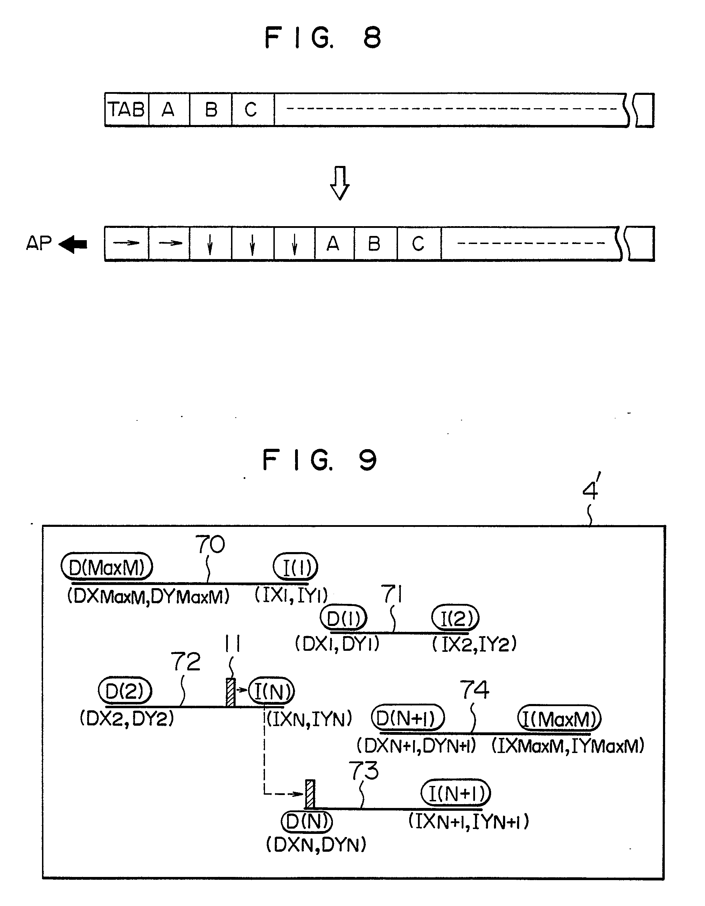

Fig. 8 is a diagram for illustrating in the manner in which the key data are stored in the key buffer 301. Referring to Fig. 8, description will be made of operation of the first and second embodiments in particular with regard to the key buffer. It is assumed that a key input request is issued from an application program running on a data processing apparatus which is operated as the document processing apparatus according to the invention. In that case, when the input key is the TAB key or BACK TAB key, the key data arithmetically determined through the procedure described above (the arrow key data in numbers corresponding to the values $X'$ and $Y'$, respectively) are once stored in the key buffer and subsequently transferred sequentially to the application program, whereby the automatic move of the cursor is realized.

In the data processing apparatus described in conjunction with Figs. 1 and 2, the mark indicating the start position is not displayed. It should however be understood that a more human-friendly document processing apparatus can be implemented by displaying the start position mark. This mark may be allocated with a space corresponding to one character. However, with a view to ensuring the comfortable character input operation, the mark may also be displayed by using an area corresponding only to a part of one character space.

Now, description will be directed to a third embodiment of the invention by reference to Figs. 9 to 12.

Fig. 9 is a schematic diagram for illustrating the moves of the cursor according to the teaching of the invention incarnated in the third embodiment. Reference numeral $4'$ designates a text generated on the screen of the display 3 shown in Figs. 1 and 2. This text is similar to that described hereinbefore in conjunction with the first embodiment. Thus, upon generation of the text, those regions located above the line segments 70 to 74 are left blank. According to the instant embodiment, the move of the cursor is performed in such a manner that the cursor moved to a specific position is automatically moved to another specific position which is paired with the former. More specifically, let's suppose that the cursor 11 located at the position in the blank region overlying the line segment 72 shown in Fig. 9 is moved to a trailing end or rightmost position I(N) identified by the coordinates $(IX_N, IY_N)$ in that blank region as the result of operation of a cursor move key or inputting of character data, the cursor is automatically moved to the start position D(N) having the coordinates $(D_{XN}, D_{YN})$ of the blank region overlying the line segment 73 by following a path indicated by a broken line, which position D-(N) is paired with the position I(N). Subsequently, upon completion of the character data input operation to the blank region overlying the line segment 73 performed by the operator, the cursor arrives at the end (rightmost) position given by the coordinates $(IX_{N+1}, IY_{N+1})$ of the blank region lying above the line segment 73. Then, the cursor is automatically moved again to the start position D(N + 1) given by the coordinates $(DX_{N+1}, DY_{N+1}$ of the blank region overlying the line segment 74, which start position D(N + 1) is paired with the end position I(N + 1) mentioned above. In this manner, the cursor is automatically moved sequentially from the position I(1) to the position D(1), I(2) to D(N), I-(N) to D(N), I(N + 1) to D(N + 1), and then I(Max. N) to D(Max. N).

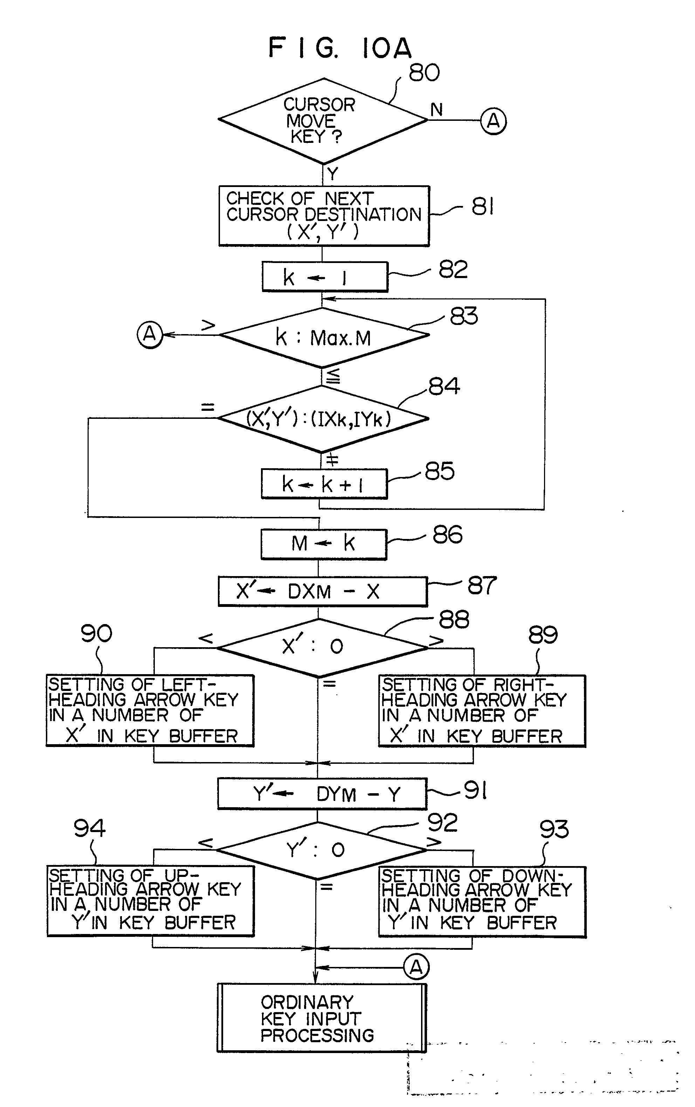

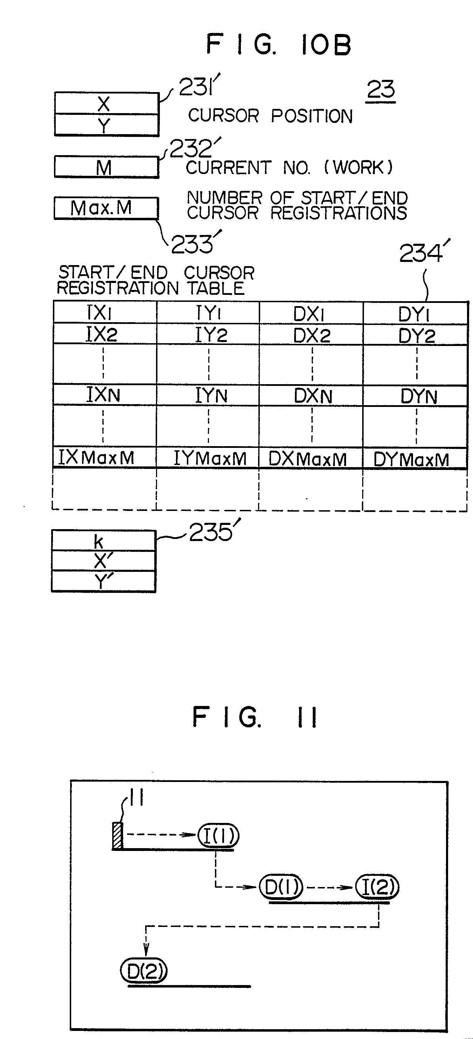

Fig. 10A shows a flow chart for illustrating the cursor move control method according to the third embodiment of the invention, and Fig. 10B is a schematic diagram showing individual areas of the RAM 23 incorporated in the processing unit 2 (Fig. 1) to be used for carrying out the cursor move control method.

In Fig. 10B, reference numeral $231'$ designates an area for storing the value of the current cursor position (X, Y) on an X-Y coordinate system, numeral 232' denotes a work area for storing the current number (No.) of a variable M, numeral 233' denotes an area for storing the maximum value of the variable M, i.e. the number of the registered cursor end/start positions, numeral 234' designates an end/start position registration table area in which the coordinate values of the end positions of the individual blank regions and those of the start positions of the destination blank regions to which the cursor arrived at the end positions are to be subsequently moved are registered in pairs, respectively, and reference numeral 235' designates a work area for the coordinate values $X'$ and $Y'$ and the variable $\underline{k}$, the roles of which will be made apparent in the course of the following description.

Referring to Fig. 10A in combination with Fig. 10B, description will now be made in detail of the third embodiment of the invention. At a step 80 (Fig. 10A), decision is made to whether or not a cursor move key is actuated. When the answer of this decision step is negative (N), the ordinary typewriting operation can be performed in continuation. On the other hand, when the decision step 80 results in the affirmative answer (Y), the destination position $(X', Y')$ to which the cursor is to be moved is detected at a step 81, being then followed by a step 82 where the variable $\underline{k}$ is initialized to "1". At a step 83, the variable $\underline{k}$ is compared with the maximum value M of the registered number of the end/start positions. When the maximum number M is smaller than the variable $\underline{k}$ initialized to "1", the ordinary typewriting operation can be performed in continuation. In case the maximum number M is equal to or greater than the variable $\underline{k}$, the processing proceeds to a step 84 where it is checked whether or not the position coordinates $(X', Y')$ are equal to the coordinates $(IX_1, IY_1)$ registered in the registration table 234'. Unless the equality is found, the variable $\underline{k}$ is incremented by "1" at a step 85, whereon the step 82 is regained. In this manner, through the steps 82 to 85, it is checked whether or not the destination $(X', Y')$ of the cursor coincides with any one of the end positions registered in the registration table 234'. When the end position $(IX_k, IY_k)$ which coincides with the position $(X', Y')$ is detected at the step 84, the variable $\underline{k}$ is stored in the current number (No.) storage area 232' at a step 86, whereon a step 87 is executed. Namely, the X-coordinate value X of the end position for which the coincidence is detected is subtracted from the X-coordinate $DX_M$ of the start position which is set in a pair with the abovementioned end position. The result of the subtraction (i.e. $DX_M - X$) is then stored in the area assigned to the coordinates $X'$ in the work area 235' at a step 87. The value $X'$ stored in the work area 235' is then compared with 0 (zero) at a step 88. If $X'$ is greater than 0, this means that the start position is located on the right hand side of the end position. Accordingly, the right-heading arrow key data is placed in the key buffer in a number equal to the value of $X'$. On the other hand, when the value of $X'$ is smaller than 0, this means that the start position lies on the left hand side of the end position. Accordingly, the left-heading arrow key data is placed in the key buffer in a number equal to the value of $X'$ at a step 90. Subsequently, the Y-coordinate value Y of the end position for which the coincidence is detected at the step 84 is subtracted from the Y-coordinate $DY_M$ of the start position paired with the abovementioned position at a step 91, the result of the subtraction ($DY_M - Y$) being then stored in the area assigned to $Y'$ of the work area 235'. At a step 92, the value of $Y'$ stored in the work area 235' is compared with 0 (zero). When $Y'$ is greater than 0, this means that the start position is located on the lower side of the end position. Accordingly, the down-heading arrow key data is placed in the key buffer in a number equal to the value of $Y'$. Conversely, when $Y'$ is smaller than 0, this means that the start position is located on the upper side of the end position. Accordingly, the up-heading arrow key is set in the key buffer in a number equal to the value of $Y'$. Through the operations described above, the cursor is automatically moved on the screen of the display unit in response to actuation of a cursor move key from the end position ($IX_k$, $IY_k$) to the start position ($DX_k$, $DY_k$) of the destination blank region. In succession to this move of the cursor, the ordinary key input processing for the destination blank region can be executed.

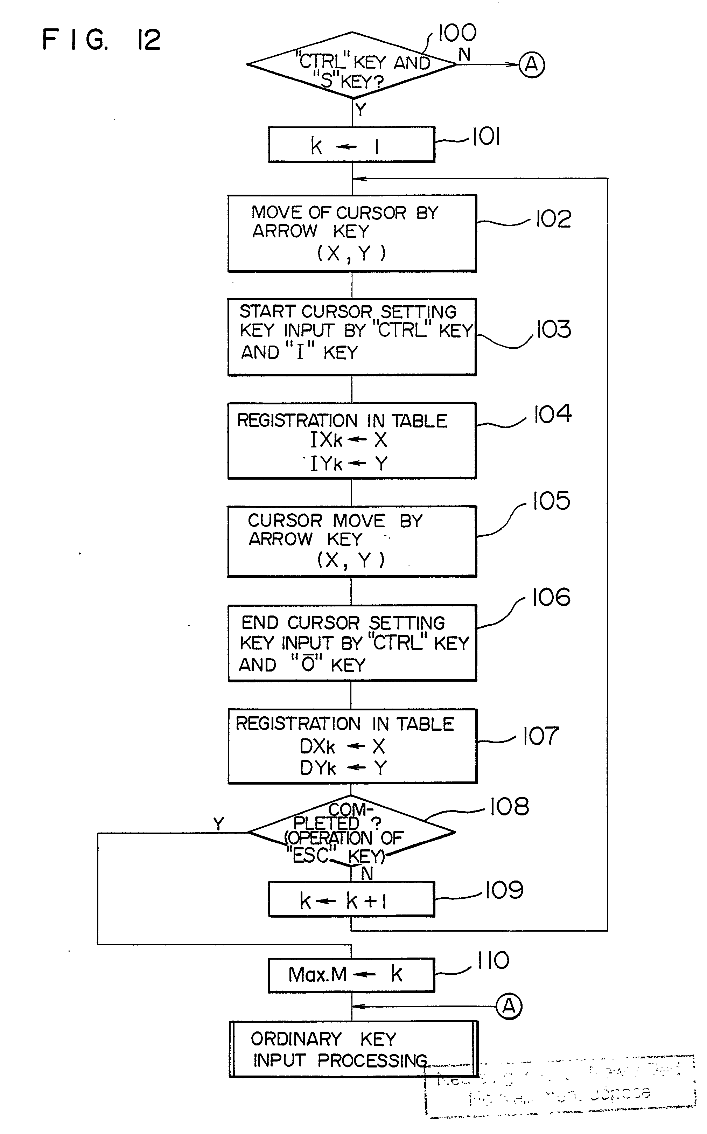

Next, referring to Figs. 11 and 12, description will be made of the procedure for setting the end/start cursor. Fig. 11 is a schematic diagram for illustrating the cursor manipulation involved in setting the end/start cursor positions, and Fig. 12 is a flow chart for illustrating a method of setting the end/start cursor positions.

In Fig. 11, it is assumed that the end positions and the start positions are to be set up sequentially at locations I(1) and D(1), I(2) and D(2), and so forth, respectively. First, the cursor located at the home position is moved to the position I(1) by operating first a corresponding cursor move key. Subsequently, an input key commanding the setting of the end cursor position is depressed to thereby register the position I(1) in the end/start cursor position registration table 234'. The command for setting the end cursor position may be inputted by pressing, for example, the CTRL key and the I key, simultaneously. Next, the cursor is moved from the position I(1) to the position D(1) by operating a corresponding cursor move key, whereon the input keys for commanding the setting of the start cursor position are operated to thereby register the position D(1) in the registration table 234'. The command for setting the start cursor position can be validated by depressing simultaneously the CTRL key and the O key, by way of example. In this way, the individual end and start positions are registered successively one by one.

Referring to the flow chart shown in Fig. 12, it is first decided at a step 100 whether or not the end/start cursor position setting mode has been validated in response to simultaneous actuation of the keys labeled, for example, "CTRL" and "S". In case the answer of the decision step 100 is negative (N), the ordinary typewriting operation can be performed in succession. On the other hand, when the result of the decision is affirmative (Y), the variable k is initialized to "1" (one) at a step 101. At a step 102, the cursor is moved to a desired end position with the aid of a corresponding arrow key. When the CTRL key and the I key, by way of example, are simultaneously depressed at a step 103, the desired end position (X, Y) is registered in the registration table 234' at an area $(IX_k, IY_k)$ at a step 104. Subsequently, the cursor is moved from the desired end position mentioned above to the start position of a desired destination blank region by operating a corresponding arrow key at a step 105. Thereafter, the CTRL key and the O key, by way of example, are depressed simultaneously to thereby register the start position (X, Y) in the registration table at a location $(DX_k, DY_k)$ at a step 105. It is then decided as to whether the operator has pressed the key labeled, for example, "ESC" (abbreviation of ESCAPE) at a step 108. If the result of the decision is negative (N), this means that all of the desired end/start positions have not been registered yet. Accordingly, the variable k is incremented by one at a step 109, whereon the step 102 is regained. The steps 102 to 109 are repeatedly executed until registration of all the desired positions has been completed. When it is decided at the step 108 in response to the operator's actuation of the ESC key that all the desired positions have been registered, then the value which the variable k assumes at that time is stored in the registration number storage area 233' as the maximum value Max. M of the registration number, whereupon the registration of the desired positions is completed.

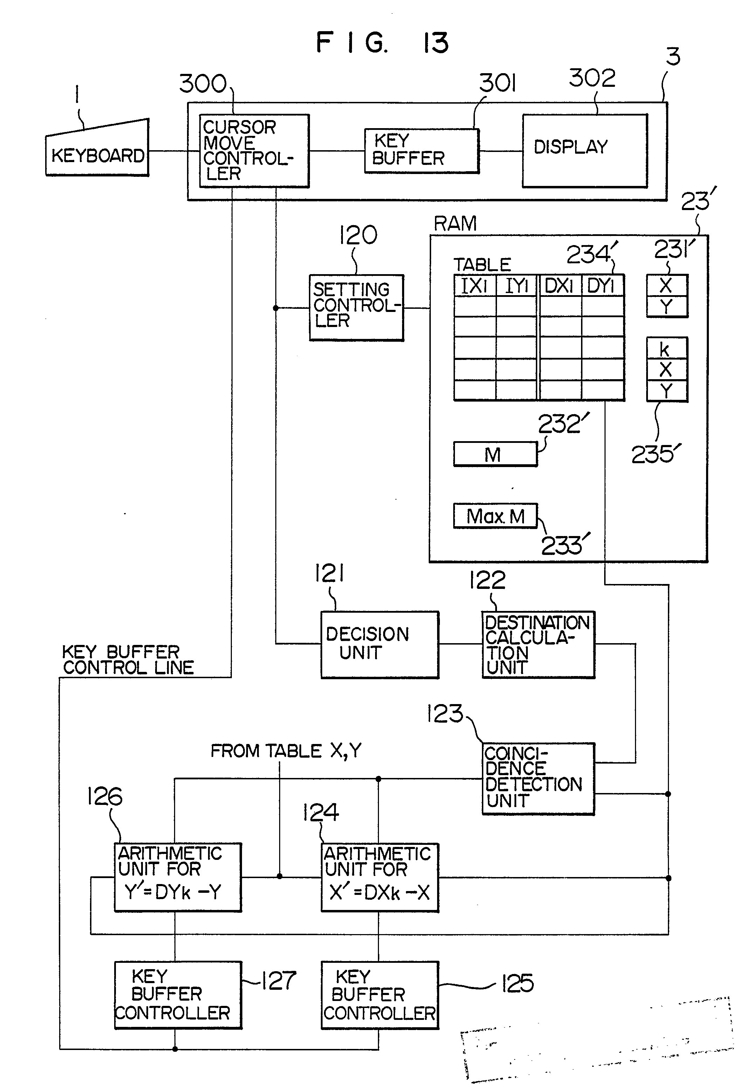

Fig. 13 is a block diagram showing an arrangement of the cursor move control apparatus according to the third embodiment of the present invention. The structure of the keyboard 1 and the display unit 3 is similar to that of the apparatus according to the second embodiment described hereinbefore in conjunction with Fig. 7. A setting controller 120 is provided for executing the processings at the steps 100 to 110. A decision unit 121 is provided for executing the processing of the step 80, i.e. for making decision as to the operation (depression) of the cursor move keys. A destination position arithmetic unit 122 performs the processing at the step 81. A coincidence detector 123 executes the processing corresponding to the steps 83 to 85 for checking whether or not the cursor position (X', Y') coincides with any one of the end cursor positions stored in the registration table 234'. An arithmetic unit 124 executes the processing corresponding to the step 87 while a key buffer controller 125 responds to the output of the arithmetic unit 124 to thereby execute the processing steps 88 to 90. In other words, the key buffer controller 125 causes the cursor move controller 300 to store in the key buffer 301 the number of the right-heading arrow key data or the left-heading arrow key data which corresponds to the result of the arithmetic operation performed by the arithmetic unit 124. The other arithmetic unit 126 executes the processing of the step 91, while the other key buffer controller 127 receives the output of the arithmetic unit 126 to execute the processings at the steps 92 to 94. More specifically, the key buffer controller 127 causes the cursor move controller 300 to store in the buffer 301 the number of the up-heading arrow key data or down-heading arrow key data, which number corresponds to the result of the arithmetic operation performed by arithmetic unit 126.

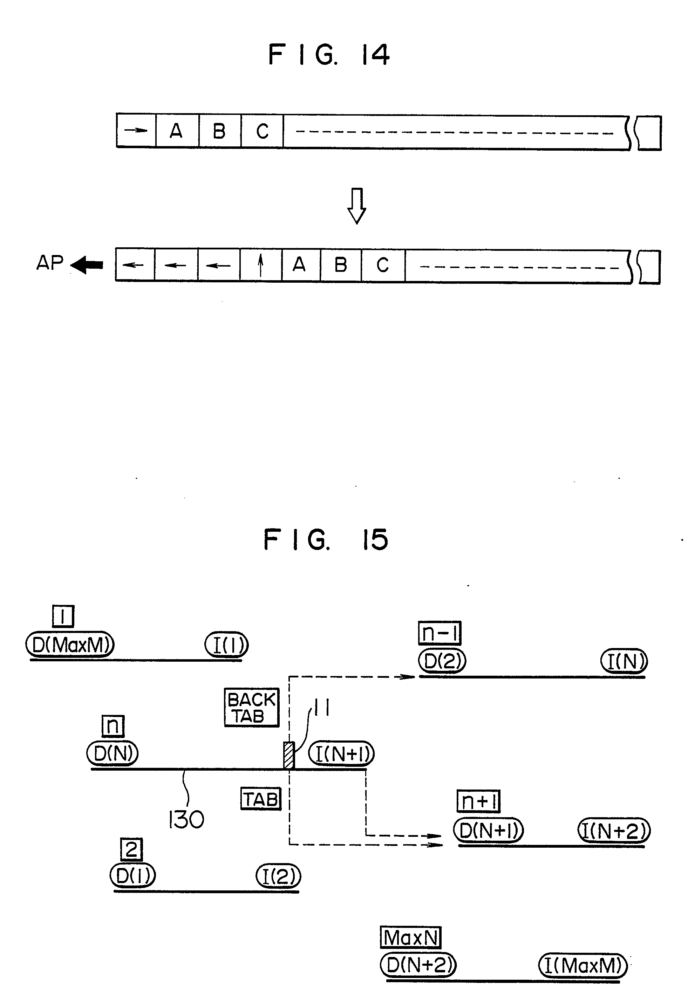

Fig. 14 is a diagram for illustrating in the manner in which the key data are stored in the key buffer. Referring to Fig. 14, description will be made of operation of the third and fourth embodiments in particular with regard to the key buffer. It is assumed that a key input request is issued from an application program running on the data processing apparatus which is operated as a document processing apparatus according to the invention. In that case, when the input key is a cursor move key, the next cursor position is obtained through the procedure described above. When the next cursor position as obtained coincides with any one of the registered end (terminal) positions, the differences X' and Y' between the coinciding end position and the start position paired therewith along the X-coordinate axis and the Y-coordinate axis, respectively, are arithmetically determined in the manner described hereinbefore, whereupon the key data required for moving the cursor from the end position to the start position mentioned above, i.e. the arrow-marked key data in the numbers corresponding to the differences X' and Y', respectively, are once stored in the key buffers before being sequentially transferred to the application program. In this way, the automatic move of the cursor can be realized.

In the above description of the third and fourth embodiments of the invention. it has been assumed that the differences $X'$ and $Y'$ between the end position ($IX_k$, $IY_k$) and the start position ($DX_k$, $DY_k$) paired with each other on the X- and Y-axes, respectively, are arithmetically determined every time the destination position to which the cursor is to be next moved coincides with the end position ($IX_k$, $IY_k$). It should however be mentioned that the differences of concern may be registered at the time the end start cursor or position are set up. In that case, steps of arithmetically determining the differences $X'$ and $Y'$ and registering them in the registration table 234' are additionally provided between the steps 107 and 108 shown in Fig. 12. Besides, the steps 87 and 91 shown in Fig. 10A are replaced by those for reading out the values $X'$ and $Y'$, respectively, from the registration table 234'. Further. the arithmetic units 124 and 126 shown in Fig. 13 will have to be replaced by reading means for reading out the values $X'$ and $Y'$ from the registration table 234'.

It should be added that also in the case of the third and fourth embodiments. there may be employed the marks which indicate the end position and the start position similarly to those described hereinbefore in conjunction with the first and second embodiments.

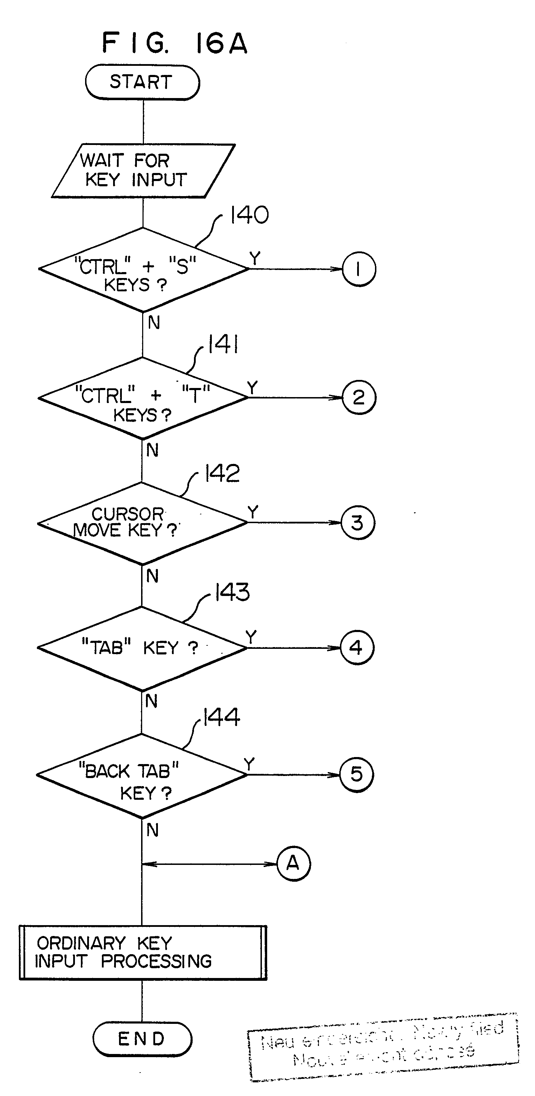

A fifth embodiment of the present invention will be described by referring to Fig. 15 and Figs. 16A to 16B.

Fig. 15 is a schematic diagram illustrating the move of the cursor according to the fifth embodiment which substantially corresponds to a combination of the first and third embodiments of the invention described hereinbefore. It is now assumed that the cursor 11 is positioned in a blank region overlying a line segment 130 and having a start position n (corresponding to the start position n in the case of the first embodiment and the start position D(N) in the case of the third embodiment). At this time, upon actuation of the TAB key or BACK key, the cursor 11 is moved to the start position of the region (n + 1) or (n - 1) as in the case of the first embodiment. When the cursor 11 is moved to the position I(N + 1) without the aid of the TAB key or BACK TAB key, the cursor is then moved to the start position D(N + 1) as in the case of the third embodiment.

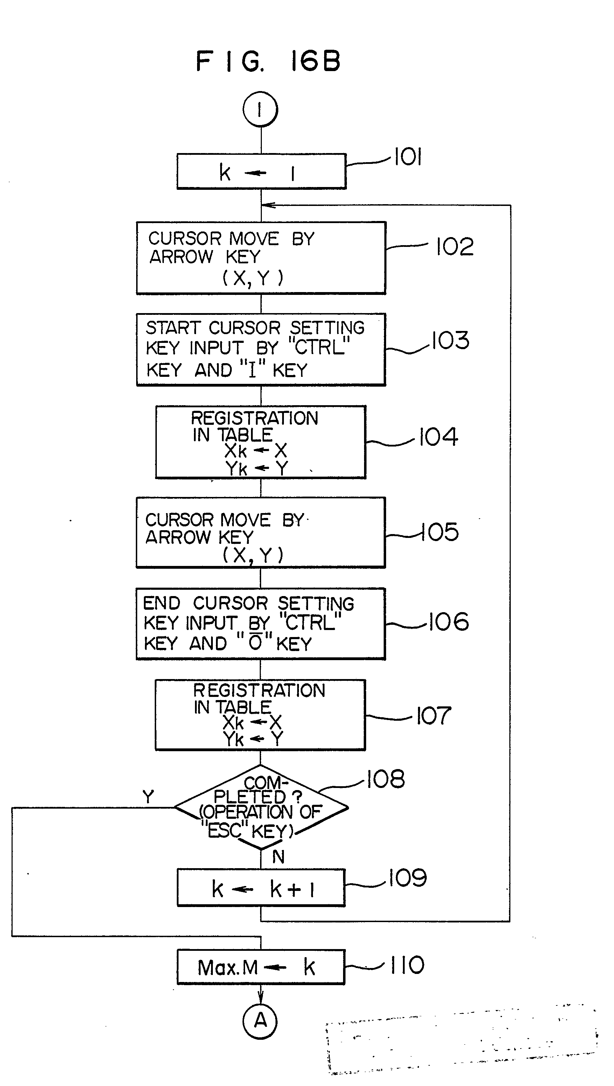

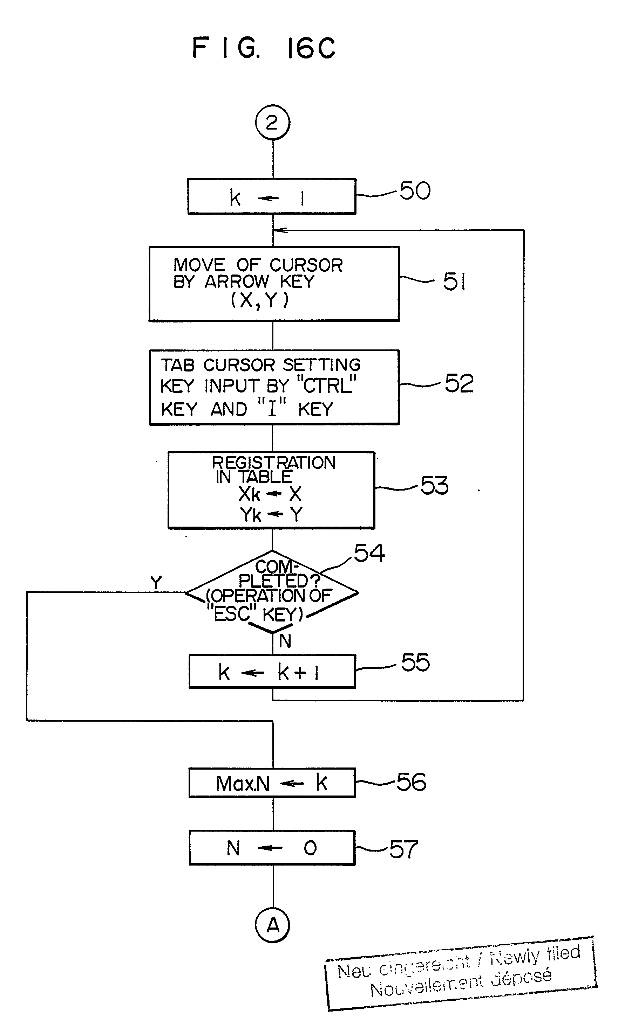

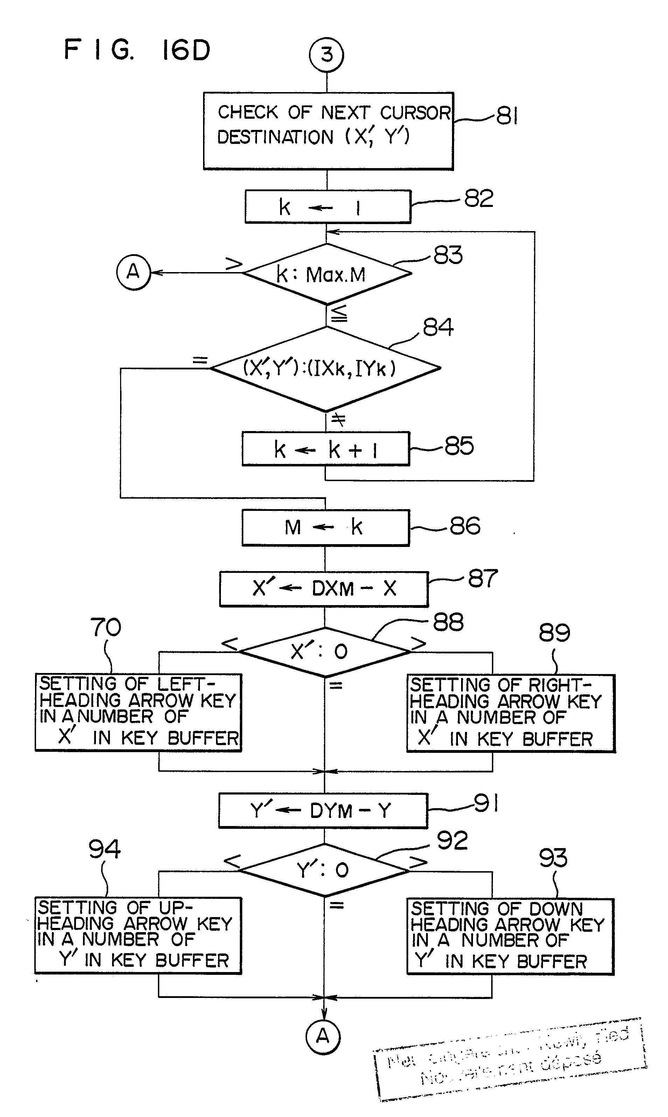

Figs. 16A to 16E are flow chart for illustrating the cursor move control method according to the fifth embodiment of the present invention. First referring to Fig. 16A, it is decided at a step 140 whether or not both the CTRL key and the S key are pressed down simultaneously. If the answer of this decision step 140 is affirmative (Y), the processing steps 101 to 110 shown in Fig. 16B are executed for thereby registering the start and end positions of the individual blank regions in the registration table. Since the processings at these step 101 to 110 have been described hereinbefore by reference to Fig. 12. repeated description will be unnecessary. On the other hand, when the decision step 140 results in the negative answer (N), the ordinary key input processing can be performed. Subsequently at a step 141, decision is made as to whether or not both the CTRL and T keys are simultaneously depressed. If this decision step 141 results in the affirmative answer (Y), then the processing steps 50 to 57 shown in Fig. 16C are executed thereby to register the start positions of the individual blank regions in another registration table. Since these steps have also been described hereinbefore by reference to Fig. 6, repeated description will be unnecessary. On the other hand, if the answer of the decision step 141 is negative (N). the ordinary key input processing is performed. Next at a step 142, decision is made as to whether any cursor move key is touched. If the answer of this decision step 142 is affirmative (Y), the processing steps 81 to 94 shown in Fig. 16D are executed, whereby the cursor, if it resides at any one of the end positions, is automatically moved to the start position paired with that end position. On the other hand, when the above decision step 142 results in the negative answer (N), the ordinary key input processing is performed. Since these steps have also been described hereinbefore in conjunction with Figs. 10A and 10B, any further description will be unnecessary. Subsequently, at a step 143, it is decided whether or not the TAB key is pressed down. If the answer is affirmative (Y), the processing steps 31 to 41 shown in Fig. 16E are executed thereby to move the cursor to the start position (n + 1) shown in Fig. 15, by way of example. On the other hand, when the above decision step 143 results in the negative answer (N), the ordinary key input processing can be carried out. Next, at a step 144, it is decided whether or not the BACK TAB key is depressed. If the answer is affirmative (N), the steps 43 to 45 and 34 to 41 shown in Fig. 16E are executed, as the result of which the cursor is moved to the start position, for example, (n - 1) shown in Fig. 15. On the other hand, when the answer of the above decision step is negative (N), the ordinary key input processing can be performed. Since the steps 43 to 45 and 34 to 41 shown in Fig. 16E have also been descried hereinbefore in conjunction with Figs. 4A and 4B, repetition thereof is omitted.

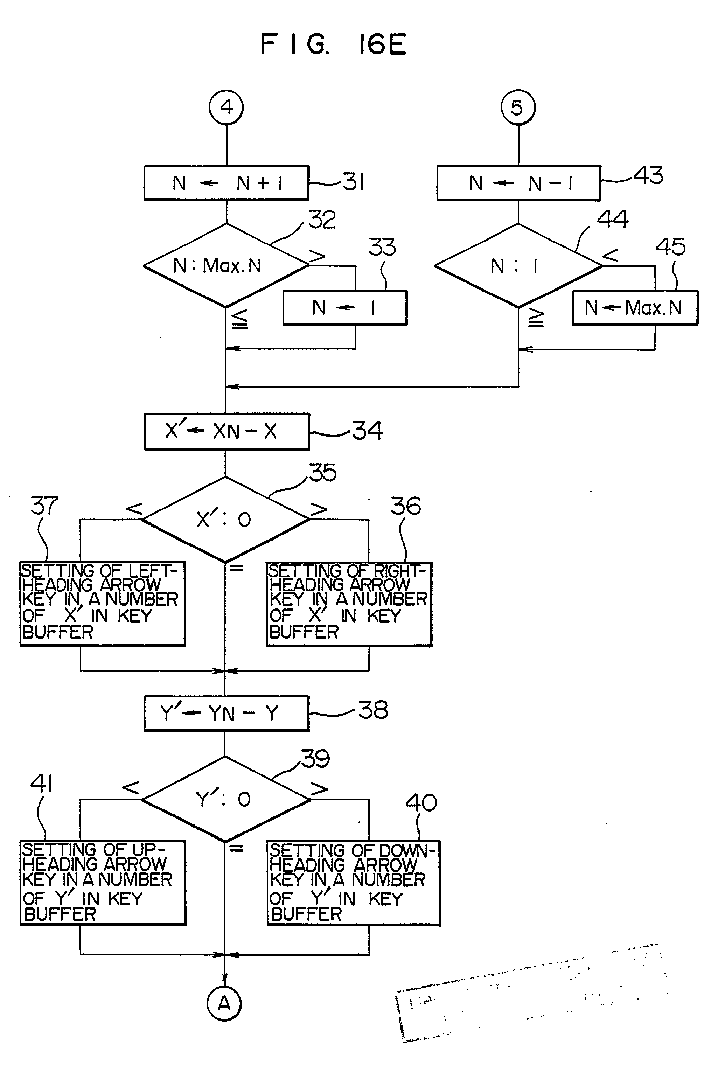

Fig. 17 is a schematic diagram for illustrating the cursor move procedure according to a sixth embodiment of the present invention which is a modification of the third embodiment described previously. According to the teaching of the invention incarnated in the sixth embodiment, there are provided in addition to the start and end positions D(1) and I(5), D(2) and I(6), D(3) and I(7), and D(4) and I(8) defining the blank regions overlying the line segments 150 to 153, respectively, those positions mentioned below. Namely, there is provided a common start position D(5, 6, 7, 8) which is a common destination to which the cursor can be moved from the end positions I(5), I(6), I(7) and I(8) and the individual end positions I(1), I(2), I(3) and I-(4) which can be reached from the common start position through at least a single operation of the cursor move key and which are paired with the start positions D(1), D(2), D(3) and D(4) of the individual blank regions, respectively. By virtue of the abovementioned arrangement, it is realized that when the cursor residing at the common start position D(5, 6, 7, 8) is moved to the position I(1) through actuation of the up-heading arrow key, the cursor is automatically moved to the start position D(1). On the other hand, when the cursor arrives at the position I(5) as the result of the character input operation or through the actuation of a cursor move key, the cursor is automatically moved back to the common start position. In other words, the cursor can be moved from the common start position D(5, 6, 7, 8) to any desired one of the blank regions through at least the single key operation. Parenthetically, it should be mentioned that the regions overlying the lines 150 to 153 define the first blank regions in which desired character data are to be written, while the regions lying between the common start position and respective end positions I-(1), I(2), I(3) and I(4) define the second blank regions. The method and the apparatus for realizing the instant embodiment are similar to those of the third embodiment described hereinbefore. Accordingly, description thereof will be unnecessary.

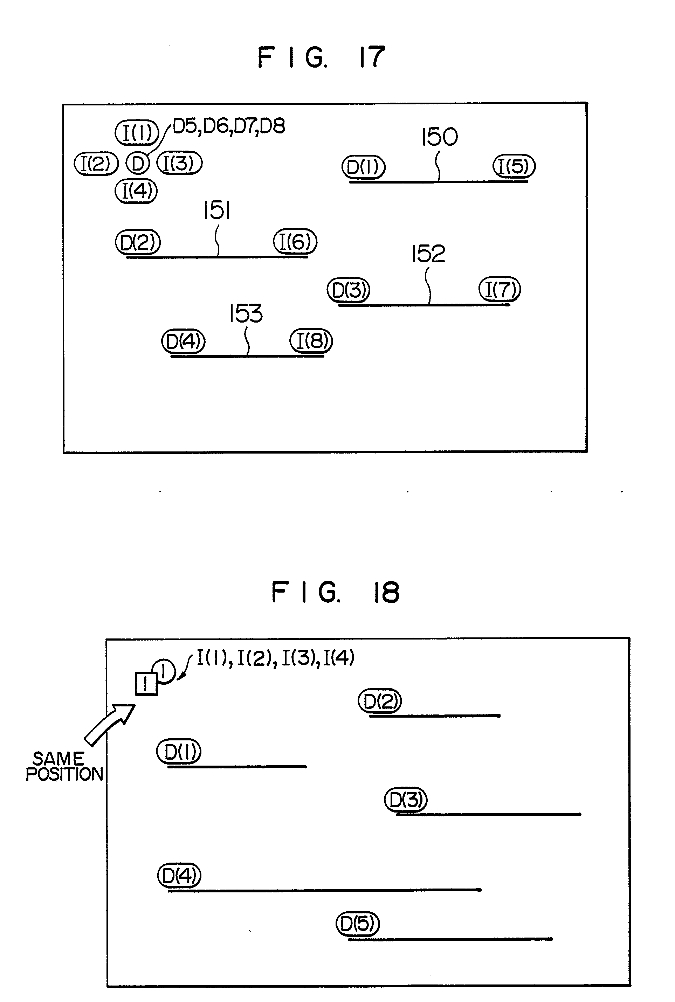

Fig. 18 is a schematic diagram for illustrating the cursor move control according to a seventh embodiment of the invention. This embodiment corresponds to a combination of the first and third embodiments of the invention.

Referring to Fig. 18, a common end position I-(1, 2, 3, 4, 5) 1 enclosed with a circle and a start position shown enclosed with a rectangle are provided at a same location. When the cursor resides at the common end position I(1, 2, 3, 4, 5), depression of a selected one of the ten keys (digit keys) "1", "2", "3", "4" and "5" causes the cursor to be automatically moved to the corresponding one of the start positions D(1), D(2), D(3), D(4) and D(5). On the other hand, upon depression of the TAB key or the BACK TAB key, the cursor is moved to the start position 1 enclosed with the rectangle. Accordingly, by depressing a selected or desired one of the ten keys "1" to "5", the cursor is moved to the corresponding start position.

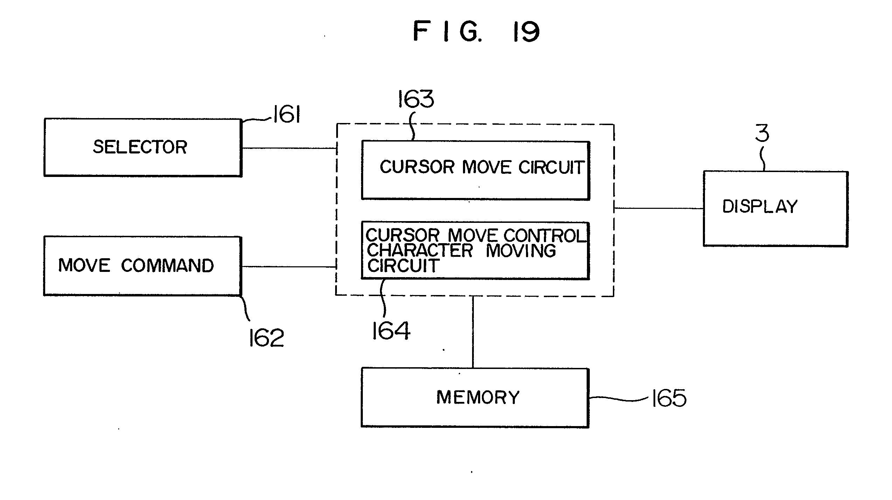

Figs. 19 to 23 show an eighth embodiment of the present invention.

According to the teaching of the invention embodied in the instant embodiment, the cursor move control is carried out by regarding two given discrete points to be one position. More specifically, a pair of symbolic characters are set for the two different points on the screen of the display unit which are regarded to be one and the same position, wherein upon positioning of the cursor on one of the symbolic characters, the cursor is moved to the position of the counterpart symbolic character which is paired with the abovementioned one character.

The instant embodiment is characterized by symbolic character input means for inputting in correspondence relation with the display screen the pairs of symbolic characters each indicating two given points on the display screen which are logically regarded to lie at a same position, position storage means for storing the positional information of each of the abovementioned symbolic characters, first cursor move control means for controlling the move of the cursor on the display screen in predetermined directions in accordance with the cursor move command information supplied from cursor move command means, and second cursor move control means for reading the content of the position storage means and detecting coincidence between a destination position to which the cursor is to be moved and one position of the abovementioned symbolic characters to thereby move the cursor to the position of the counterpart symbolic character paired with the one symbolic character mentioned above.

Upon inputting of the symbolic character to each of the two given discrete points by the symbolic character input means, the corresponding positional information is stored in the positional information storage means.

Ordinarily, in response to the command issued by the cursor move command means, the cursor is moved on the display screen in a predetermined direction under the control of the first cursor move control means. However, the destination of the cursor move controlled by the first cursor move control means is monitored or supervised by the second cursor move control means, wherein upon occurrence of coincidence between the position of one symbolic character and that of the destination, the second cursor move control means moves the cursor to the position of the counterpart symbolic character which is set in a pair with the one symbolic character mentioned above. In other words, when the cursor is moved to one of the symbolic character positions, it is instantaneously moved to the position of the counterpart symbolic character position paired with the one symbolic character position. Thus, by setting once the symbolic characters at desired positions, the cursor can easily be moved to any one of the desired positions through simplified manipulation.

In the following, the instant embodiment will be described in detail by reference to the drawings. Fig. 19 is a block diagram showing a general arrangement of the cursor move control apparatus according to the eighth embodiment of the present invention. In the figure, reference numeral 166 denotes a display unit such as a cathode ray tube (CRT) or the like, 161 denotes a selector circuit for selecting one from the cursor and a plurality of cursor move control characters as the object to be moved, and numeral 165 denotes a storage circuit for storing the positional information of the cursor and the plurality of the cursor move control characters. Further, reference numeral 164 denotes a cursor move circuit which responds to the selection of the cursor move control character by the selector circuit 161 for thereby arithmetically determining the next position for displaying the character in accordance with the move command information supplied prom the move command circuit 162 and the positional information set and stored in the storage circuit 165 and moving the cursor move control character displayed on the display 3 to the determined next position. Numeral 163 denotes a cursor move circuit which responds to the selection of the cursor by the selector circuit 161 for thereby arithmetically determines or calculates the next position at which the cursor is to be displayed and moving the cursor displayed on the screen of the display unit 3 to the calculated position in accordance with the move command information obtained from the move command circuit 162, the positional information stored in the storage circuit 165 and the position information of the plurality of cursor control characters.

The calculation of the destination to which the cursor is to be moved is made on the basis of the current cursor position and the information indicating the destination. In that case, if the cursor move control character happens to be located at the position of the destination as calculated, the cursor move circuit 163 performs such control operation that the cursor is moved to the position of the counterpart cursor move control character which is paired with the abovementioned character.

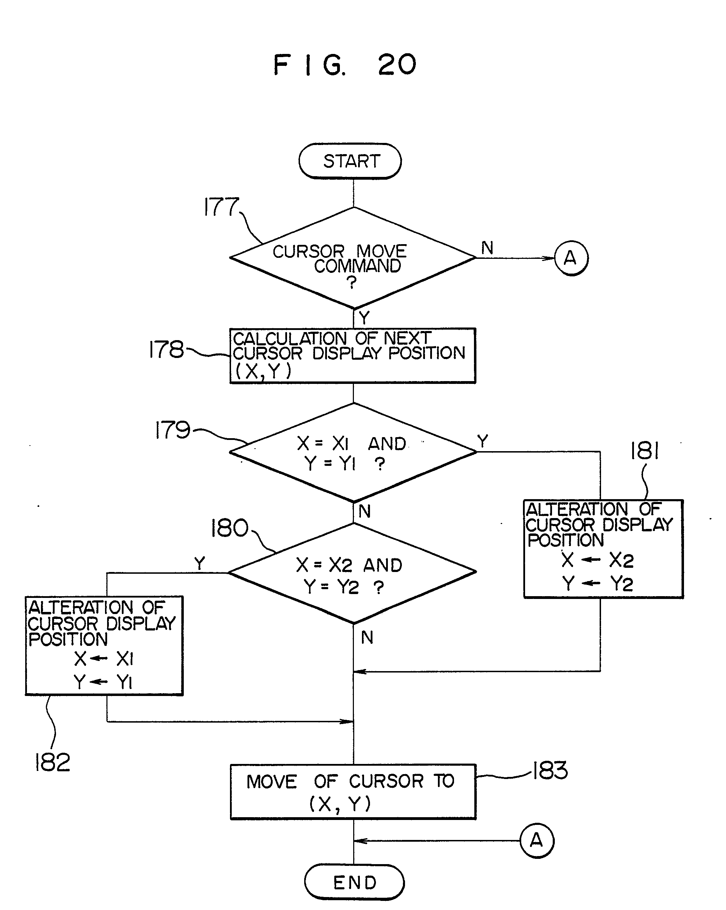

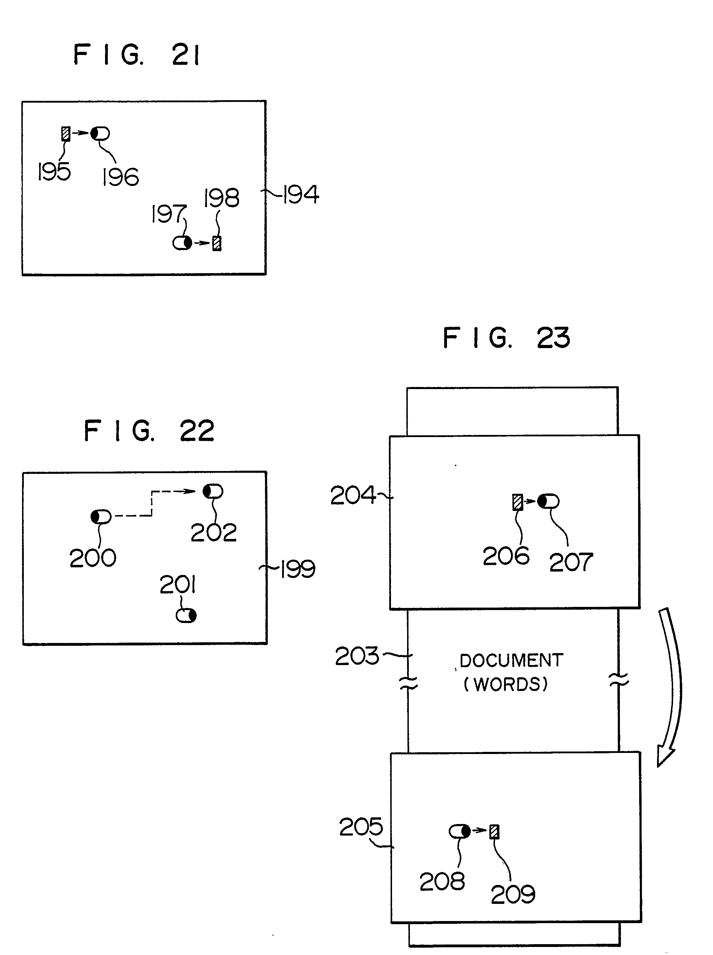

Fig. 20 is a flow chart for illustrating in detail the cursor move outlined above. When the operator inputs the cursor move command with the aid of an arrow key or the like at a step 177, the position (x, Y) at which the cursor display is to be generated is arithmetically determined at a step 178. At that time, if a pair of the cursor move control characters are currently displayed on the screen of the CRT or the like, then the positions $(X_1, Y_1)$ and $(X_2, Y_2)$ at which the cursor move control characters are being displayed are collated with the position (X, Y) at which the cursor is next to be displayed (at steps 179, 180). When the position (X, Y) where the cursor is to be displayed is same as the character position $(X_1, Y_1)$, the position (X, Y) where the cursor is to be displayed is altered to the position $(X_2, Y_2)$ of the counterpart cursor move control character at a step 181. Similarly, when the position (X, Y) for the cursor display is identical with the character position $(X_2, Y_2)$, the cursor position (X, Y) to be displayed is altered to the position $(X_1, Y_1)$ of the counterpart cursor move control character. In case neither the position $(X_1, Y_1)$ nor the position $(X_2, Y_2)$ is same as the position (X, Y) for the cursor display, the alteration of the position (X, Y) mentioned above is not validated. After completion of the processing described above, the cursor displayed on the screen is moved to the cursor display position (X, Y) at a step 183. Fig. 21 is a schematic diagram illustrating a manner in which the cursor is moved in association with the cursor move control characters (hereinafter referred to as the cursor holes). It is assumed that the positions of the cursor holes 196 and 197 are being displayed on the screen 194 and that the cursor located at the position 195 is moved to the right through depression of the right-heading arrow key. When the cursor has reached the cursor hole position 196, it is then moved toward the other cursor hole position 197 to attain the position 198. Selection of the object to be moved is realized through corresponding keyboard operation for selecting one from the cursor and the plural cursor holes.

Fig. 22 is a schematic diagram illustrating a manner in which the cursor hole is moved.

Referring to Fig. 22, the cursor holes are being displayed at the positions 200 and 201 on the screen 199. When the cursor hole at the position 200 is selected as the object to be moved through the corresponding input operation of the keyboard, it is then possible to move the selected cursor hole by depressing the arrow (cursor) keys or other. In this connection, it is to be added that the cursor hole at the position 200 can be discriminated from the other by displaying that cursor hole in a color or blink. The cursor hole can be moved from the position 200 to a position 202 by operating several times the right-heading arrow key and the up-heading arrow key as in the case of validating the ordinary cursor move.

Next, description will be directed to an exemplary application of the instant embodiment of the invention. Fig. 23 is a schematic diagram for illustrating the cursor move performed by making use of the cursor hole function in the course of the creation of sentences with a word processor or the like. In Fig. 23, reference numeral 203 designates a text being currently edited, wherein a start portion of the text is displayed on the screen 204. In the display shown in Fig. 23, only one cursor hole position 207 makes appearance. In this conjunction, it should be mentioned that this cursor hole is not set at a fixed position on the display screen but at a certain position in the text. The counterpart cursor hole paired with the abovementioned cursor hole is located at a position toward the end of the text. Accordingly, the pair of the cursor holes can not simultaneously be viewed in one and the same picture frame. When the cursor residing at a position 206 in the picture frame 204 has attained a position 207 through operation of the right-heading arrow key, the display is changed over to a picture frame 205 because of the move of the cursor to the cursor hole positioned toward the end of the text. The picture frame 205 is dimensioned such that the last mentioned cursor hole can be displayed at an appropriate position 208 in the renewed picture frame 205. Thus, the cursor is moved to a position 209 to be displayed. It should be noted that the symbolic characters or the cursor holes are not limited to the shapes as shown but many other shapes may be used, as described hereinbefore.

As will now be appreciated from the above description of the eighth embodiment of the invention, there can be realized a cursor move control which facilitates the cursor move manipulation, allowing the cursor move between two distanced points to be performed within a short period, thus enhancing the manipulatability of the cursor.

Finally, description will be made of the processing for translation of the buffer content by reference to the drawing.

An operating system (OS in abbreviation) consists of a set of programs for controlling various functions of a computer and is a kind of software serving as go-between for the hardware and such software as application programs (AP in abbreviation).

The operating system (OS) plays roles of making decision for the inputs through the keyboard, displaying the results of processing on the CRT display screen and serving for management of hardware such as efficient allocation of the memories.

The application program (AP) is software such as a word processing program, edition program or the like and usually adapted to perform processings by making use of the functions of the operating system instead of controlling directly the hardware.

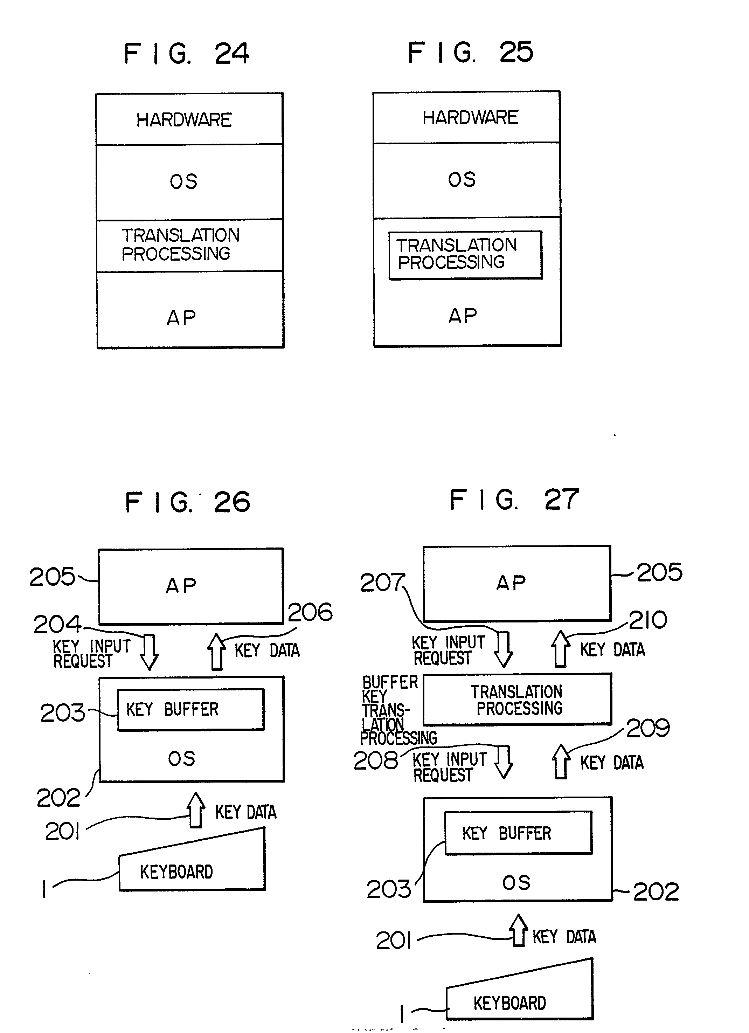

The buffer content translation or conversion processing now under consideration is implemented in the form of software which operates in response to the key input processing performed by the application program. There are conceivable two types of the buffer content translation (conversion) processings. One is a processing performed by independent software existing between the operating system and the application program, as shown in Fig. 24, and the other is a processing executed as a part of the application program, as is illustrated in Fig. 25. The former buffer translation processing loses its function upon completion of execution of the relevant application program. However, the second mentioned buffer translation processing is capable of maintaining its function even after the completed execution of the application program. In other words, the former can provide the same function for given application programs. However, in the case of the former, the content of the registration table set union execution of a preceding application program will be lost whenever the table content is updated by an application program activated subsequently. In contrast, in the case of the latter, when the application program is, for example, a word processor program, it is possible to store the content of the registration table in external storage equipment such as a disc memory or the like so that the information stored in the external storage equipment can be read out therefrom to thereby restore the content of the registration table.

Now, description will be made as to how the translation processing of concern is performed.

For performing the key input processing, the application program usually issues a key input request to the operating system to receive the key data. Upon detection of the key input request issued by the application program, the operating system checks the content of the key buffer and fetches one start key data therefrom, when the key data are stored in the key buffer, the fetched data being then transferred to the application program.

In the key input processing described above, the translation processing according to the invention intervenes between the application program and the operating system for detecting the key input request from the application program in precedence to the operating system to thereby execute the translation processing. To say in another way, the key buffer content is checked in precedence to execution of the processing by the operating system, wherein when the start data of the key buffer is the key data to be subjected to the translation processing, the content of the key buffer is rewritten. Thereafter, the function of the operating system is validated for fetching the one start data from the key buffer to transfer it to the application program.

Further details of the translation processing is illustrated in Fig. 26 and 27, in which Fig. 26 is a block diagram showing a general arrangement of the data processing apparatus such as a conventional word processor or the like, and Fig. 27 shows an arrangement for the key buffer content translation processing according to the invention.

Referring to Figs. 26 and 27, when a key of the keyboard 1 is depressed, key data 201 inputted thereby is sent out from the keyboard 1 and received by the operating system 202 to be placed in the key buffer 203 which can store therein a plurality of key data. By virtue of this feature, the key data are stored in the key buffer without being lost, even when the key input request 204 is delayed in the timing of issuing the same, which may take place, for example, in case a key is actuated rapidly in succession. The foregoing applies in common to both arrangements shown in Figs. 26 and 27.

In the case of the commonly used arrangement shown in Fig. 26, when the application program 205 issues the key input request, the operating system 202 checks, first of all, the content of the key buffer 203 to fetch the key data 206, if present, the key data being then transferred to the application program 205.

On the other hand, in the case of the arrangement shown in Fig. 27, the key request 207 issued by the application program 205 is detected by the translation processing module 202 according to the invention in precedence to the operating system 202 to thereby check the content of the key buffer 203. When the data to be subsequently read out from the key buffer 203 (the start data of the key buffer) is the key data to be subjected to the translation processing according to the invention, translation of the key data is effected to rewrite the content of the key buffer. subsequently, the translation processing module 202 issues the key input request 208 to the operating system to receive the key data 209 therefrom. The received data 209 is then transferred to the application program as the key data 210.

## Claims

1. A cursor move control method employed in a data processing apparatus including a display screen and a keyboard, wherein a given one of symbols inclusive of characters is inputted to a position indicated by a cursor, comprising:
a first step (49 - 57) for registering at least one desired position on said display screen in registration means (234);
a second step (30 - 34, 38, 42 - 45) responsive to operation of a predetermined key (TAB, BACK TAB) of said keyboard for determining arithmetically difference between a current cursor position and said desired position; and
a third step (35 - 37, 39 - 41) for moving said cursor from said current position to said desired position in accordance with said difference.

2. A cursor move control method according to claim 1, wherein said first step includes:
a step (50 - 55) for registering each of a plurality of the desired positions in said registration means (234) in association with the order of the registration, and wherein
said second step includes:
a step (30 - 33, 42 - 45) responsive to operation of said predetermined key for designating sequentially said desired positions registered in said registration means and a step (34, 38) for calculating sequentially the differences between said designated desired positions and the current cursor positions which the cursor occupies every time said desired position is designated.

3. A cursor move control method according to claim 1, wherein said first step includes:
a fourth step (50) for initializing first storage means (235) destined for storing a value (k) representative of the position of the sequence at which each of said plurality of desired positions is registered in said registration means;
a fifth step (51) responsive to operation of said keyboard for moving said cursor to a first position of said plurality of the desired positions;
a sixth step (52, 53) for setting said first position in said registration means in association with the initial value stored in said first storage means;
a seventh step for incrementing said value stored in said first storage means;
an eighth step for executing said fifth to seventh steps for each of the remaining ones of said plural desired positions; and
a ninth step (57) for initializing a value (N) stored in second storage means (232), said value (N) in response to operation of said redetermined key, being used for designating sequentially said position of sequence of the registration in said registration.

4. A cursor move control method according to claim 3, wherein said second step includes a step (31, 43) for incrementing or decrementing the value stored in said second storage means (232) in response to operation of said predetermined key.

5. A cursor move control method according to claim 4, wherein said third step includes a step (34, 38) for arithmetically determining a difference between the current cursor position and the desired position corresponding to said incremented or decremented value stored in said second storage means (232).

6. A cursor move control method employed in a data processing apparatus including a display screen and a keyboard, wherein a given one of symbols inclusive of characters is inputted to a position indicated by a cursor, comprising:

a first step (49 - 57) for registering in a registration table a start position of each of a plurality of desired regions on said display screen in which desired symbols are to be inputted;

a second step (30 - 34, 38, 42 - 45) responsive to operation of a predetermined key (TAB, BACK TAB) of said keyboard for determining arithmetically difference between a current cursor position and the start position of any one of said regions to which said cursor is to be moved; and

a third step (35 - 37, 39 - 41) for moving said cursor in accordance with said difference from said current position to the start position of the region to which said cursor is to be moved.

7. A cursor move control method according to claim 6, wherein said first step includes:

a step (50 - 55) for registering the start position of each of a plurality of the desired regions in said registration table (234) in association with the position of the sequence at which said start position is registered in the registration, and

wherein said second step includes a step (30 -33, 42 - 45) responsive to operation of said predetermined key for designating sequentially said start positions registered in said registration means, and a step (34, 38) for calculating the difference between said designated start position and said current cursor position.

8. A cursor move control method according to claim 6, wherein said first step includes:

a fourth step (50) for initializing first storage means (235) destined for storing the position of the sequence at which respective start positions are registered in said registration table;

a fifth step (51) responsive to operation of said keyboard for moving said cursor to the start position of one of said plural desired regions;

a sixth step (52, 53) for setting said start position in said registration table in association with the position of the sequence at which said start position is stored in said first storage means;

a seventh step (55) for incrementing the number stored in said first means (235);

an eighth step (51 - 54) for executing said fifth to seventh steps for each of the remaining ones of said plural

regions; and

a ninth step (57) for initializing a number (N) stored in second storage means (232), said number (N) being used for designating sequentially said position of the sequence registered in said registration.

9. A cursor move control method according to claim 8, wherein said second step includes a step (31, 43) for incrementing or decrementing the number stored in said second storage means (232) in response to operation of said predetermined key.

10. A cursor move control method according to claim 9, wherein said third step includes a step (34, 38) for arithmetically determining a difference between the current cursor position and the desired start position corresponding to said incremented or decremented number stored in said second storage means (232).

11. A cursor move control method employed in a data processing apparatus including a display screen and a keyboard, wherein a given one of symbols inclusive of characters is inputted to a position indicated by a cursor, comprising:

a first step (100 - 110) for registering in a registration means at least one pair of first and second positions on the display screen, wherein said first and second positions are such that when said cursor is positioned at said first position, said cursor is automatically moved to said second position;

a second step (80 - 85) responsive to operation of a cursor move key for detecting whether or not the destination to which said cursor is to be moved coincides with any one of said first positions; and

a third step (86 - 94) responsive to the detection of the coincidence with said destination and said first position for moving said cursor to the second position which is paired with said first position for which the coincidence is detected.

12. A cursor move control method according to claim 11, wherein said first step includes:

a fourth step (102) for moving said cursor to one of said first positions in response to corresponding operation of said keyboard;

a fifth step (103, 104) for setting said one position in said registration means in response to corresponding operation of said keyboard;

a sixth step (105) for moving said cursor to the second position paired with said one position in response to corresponding operation of said keyboard;

a seventh step (106, 107) for setting said second position in said registration means in response to corresponding operation of said keyboard; and

an eighth position (109) for executing sequentially said fourth to seventh steps for each of the remaining ones of plural pairs of said first and second positions.

13. A cursor move control method according to claim 11, wherein

said first step includes:

a step (86, 87, 91) for arithmetically determining difference between the first position for which said coincidence is detected and the second position paired with said first position for which coincidence is detected, and

a step (88 - 90, 92 - 94) for moving said cursor in accordance with said difference.

14. A cursor move control method according to claim 11, wherein

said first step further includes:

a step for registering in said registration means differences between the first positions and the second positions paired with said first positions, respectively, and

said third step includes:

a step for moving said cursor in accordance with difference between the first position for which said coincidence is detected and the second position paired with said first position.

15. A cursor move control method employed in a data processing apparatus including a display screen and a keyboard, wherein a given one of symbols inclusive of characters is inputted to a position indicated by a cursor, comprising:

a first step (101 - 110) for registering in a first registration means a plurality of pairs of first and second positions on the display screen, wherein each of said first positions and each of said second positions set in a pair are such that when said cursor is positioned at said first position, said cursor is automatically moved to said second position;

a second step (50 - 57) for further registering said second positions in a second registration means, wherein said first and second steps are executed either in the sequence of the first step to the second or in the sequence of the second step to the first step;

a third step (81 - 85) responsive to operation of a cursor move key of said keyboard for detecting whether the destination to which said cursor is to be moved coincides with any one of said first positions registered in said first registration means;

a fourth step (86 - 94) responsive to the detection of said coincidence for moving said cursor to the second position paired with said first position for which said coincidence is detected;

a fifth step (31 - 34, 38) responsive to operation of a predetermined key of said keyboard for determining difference between the current cursor position and a given one of the second positions registered in said second registration means; and

a sixth step (35 - 37, 39 - 41) for moving said cursor from the current position to said given one of the second positions in accordance with said difference.

16. A cursor move control method employed in a data processing apparatus including a display screen and a keyboard, wherein a given one of symbols inclusive of characters is inputted to a position indicated by a cursor, comprising:

a first step (100 - 110) for registering in a registration table at least a start position and an end position of each of a plurality of desired regions on the display screen, wherein said registration is so performed for each of said plural desired regions that the end position of a given one of said regions is paired with the start position of a destination region to which said cursor is to be moved from said end position of said given region;

a second step (80 - 85) responsive to operation of a cursor move key of said keyboard for detecting whether the destination to which said cursor is to be moved coincides with any one of said end positions; and

a third step (86 - 94) responsive to the detection of said coincidence for moving said cursor to the start position which is paired with the end position for which said coincidence is detected.

17. A cursor move control method according to claim 16, wherein said first step includes:

a fourth step (102) for moving said cursor to the end position of one of said plural desired regions in response to corresponding operation of said keyboard;

a fifth step (103, 104) for setting the end position of said one region in said registration table;

a sixth step (105) for moving said cursor to the start position of the destination region to which said cursor is to be moved from the end position of said one region in response to further corresponding operation of said keyboard;

a seventh step (106, 107) for setting said start position of said destination region in said registration table; and

an eighth step (109) for executing said fourth to seventh steps sequentially for each of the remaining ones of said plural desired regions.

18. A cursor move control method according to claim 16, wherein said third step includes:

a step (86, 87, 91) for arithmetically determining difference between the end position for which said coincidence is detected and the start position which is set in a pair with said end position for which said coincidence is detected, and

a step (88 - 90, 92 - 94) for moving said cursor in accordance with said difference.

19. A cursor move control method according to claim 16, wherein said first step includes: a step for registering additionally in said registration table as said pair the differences between the end position of said given region and said start position of said destination region, and

said third step includes:

a step for moving said cursor on the basis of said difference registered in combination with said end position for which said coincidence is detected.

20. A cursor move control method according to claim 16, said plural desired regions including first regions in which given characters are to be written and second region defined by a common start position and end positions which are located around said common start position and at which said cursor located at said start position can arrive through at least a single operation of a cursor move key;

wherein when said cursor located at said common start position is moved to the end position of the desired one of said second regions, said cursor is moved to the desired one of said first regions.

21. A cursor move control method employed in a data processing apparatus including a display screen and a keyboard. wherein a given one of symbols inclusive of characters is inputted to a position indicated by a cursor, comprising:
a first step (101 - 110) for registering in a first registration table a start position and an end position of each of plural desired regions on said display screen, wherein at least an end position of a given one of said plural desired regions and a start position of the region to which said cursor is to be moved prom said end position are registered in said first registration table for each of said plural desired regions:
a second step (50 - 57) for registering the start position of each of said plural desired regions additionally in a second registration table:
said first and second steps being executed either in the sequence of the first step to the second step or in the sequence of the second step to the first step;
a third step (81 - 85) responsive to operation of a cursor move key of said keyboard for detecting whether the destination to which the cursor is to be moved coincides with one of said end positions registered in said registration table:
a fourth step (86 - 94) responsive to the detection of said coincidence for moving said cursor to the start position which is paired with the end position for which said coincidence is detected;
a fifth step (31 - 34, 39. 43 - 45) for arithmetically determining difference between the current cursor position and the start position of the destination region in response to operation of a predetermined key; and
a sixth step (35 - 37, 39 - 41) for moving said cursor from said current position to the start position of said destination region in accordance with said difference.

22. A cursor move control apparatus for use in a data processing apparatus including a display screen (3) and a keyboard (1), wherein a given one of symbols inclusive of characters is inputted to a position indicated by a cursor, comprising:
registration means (23, 60 - 62) coupled to said keyboard for storing each of a plurality of desired positions on said display screen;
arithmetic means (63, 64) coupled to said registration means for calculating difference between the current position of the cursor and the start position of a given one of regions stored in said registration means in response to operation of a predetermined key of said keyboard; and
control means (65, 66) coupled to said arithmetic means and a cursor controller of said data processing apparatus for controlling said cursor controller in accordance with said difference.

23. A cursor move control apparatus according to claim 22, said registration means including storage means (23) for storing said desired positions. and registration control means (60) to be connected to said cursor controller and connected to said storage means (23) for controlling said storage means so that each of said desired positions is stored in association with the position of the sequence at which each position is registered in said storage means;
wherein said arithmetic means includes:
means (61) for designating sequentially each of said registered desired positions in response to operation of said predetermined key; and
means (63, 64) for calculating difference between the designated desired position and the current cursor position.

24. A cursor move control apparatus for use in a data processing apparatus including a display screen (3) and a keyboard (1), wherein a given one of symbols inclusive of characters is inputted to a position indicated by a cursor, comprising:
registration means (23, 60 - 62) to be coupled to said keyboard for registering therein the start position of each of plural desired regions on said display screen;
arithmetic means (63, 64) coupled to said registration means for calculating difference between the current position of said cursor and the start position of a given one of said regions stored in said registration means in response to operation of a predetermined key of said keyboard; and
control means (65, 66) coupled to said arithmetic means and to be coupled to a cursor controller of said data processing apparatus for controlling said cursor controller in accordance with said difference.

25. A cursor move control apparatus according to claim 24, wherein said registration means including:
storage means (23) for storing said start positions, and
registration control means (60) to be connected to said cursor controller and connected to said storage means for controlling said storage means so that each of said start positions of said plural desired regions is stored in said storage means in association with the position of sequence at which each start position is registered in said storage means, and
wherein said arithmetic means includes:
designating means (61) for designating sequentially each of said registered start positions in response to operation of said predetermined key, and
calculating means (63, 64) for calculating difference between said designated start position and the current cursor position.

26. A cursor move control apparatus for use in a data processing apparatus including a display screen (3) and a keyboard (1), wherein a given one of symbols inclusive of characters is inputted to a position indicated by a cursor, comprising:

registration means (120, 23') to be coupled to said keyboard for registering at least a pair of first and second positions on said display screen, said first and second positions are such that when said cursor is positioned at said first position, said cursor is automatically moved to said second position;

detecting means (121 - 124, 126) responsive to operation of a cursor move key of said keyboard for determining arithmetically the destination to which said cursor is to be moved and detecting whether said calculated destination coincides with any one of the first positions; and

move control means (125, 127) for controlling in response to the detection of said coincidence said cursor so that it is moved to the second position paired with said first position for which the coincidence is detected.

27. A cursor move control apparatus according to claim 26, wherein said cursor move control means includes:

calculating means (124, 126) for calculating in response to the detection of said coincidence the difference between the first position for which the coincidence is detected and the second position paired with said first position, said cursor being moved in accordance with the difference resulting from said calculation.

28. A cursor move control apparatus according to claim 26, wherein said registration means registers previously therein the difference between the first position and the second position paired with said first position for each of said plurality of pairs, and wherein said move control means includes means responsive to the detection of said coincidence for reading out from said registration means the difference between the first position for which said coincidence is detected and the second position paired with said first position, said cursor being moved in accordance with said difference read out from said registration means.

29. A cursor move control apparatus for use in a data processing apparatus including a display screen and a keyboard, wherein a given one of symbols inclusive of characters is inputted to a position indicated by a cursor, comprising:

registration means (120, 23') coupled to said keyboard for registering at least a start position and an end position of each of plural desired regions on said display screen (3), said registration means registering in a pair the end position of a given one of said regions and the start position of the destination region to which said cursor is to be moved from said end position for each of said plural desired regions;

detecting means (121 - 124, 126) responsive to operation of a cursor move key for calculating the destination to which said cursor is to be moved and detecting whether said calculated destination coincides with any one of said end position; and

cursor move control means responsive to the detection of the coincidence for controlling said cursor so that said cursor is moved to the start position paired with the end position for which said coincidence is detected.

30. A cursor move control apparatus according to claim 29, wherein said move control means includes means (124, 126) responsive to the detection of the coincidence for calculating the difference between the end position for which said coincidence is detected and the end position paired with said first position, said cursor being moved in accordance with the difference resulting from said calculation.

31. A cursor move control apparatus according to claim 29, said registration means registering previously for each of said plural desired regions the difference between the end position of given one region and the start position paired with said end position;

wherein said move control means includes means responsive to the detection of said coincidence for reading out from said registration means the difference between the end position for which the coincidence is detected and the start position paired with said end position, said cursor being moved in accordance with the difference read out from said registration means.

# F I G. 1

PROCESSOR

2

22 ROM

23 RAM

21 MPU

24 TEXT RAM

KEYBOARD 1

DISPLAY

3

# F I G. 2

5C

CS

3

2

1

F I G. 3

4

5    8

1  (X1,Y1)    n-1  (XN-1,YN-1)

BACK TAB    11

n  (XN,YN)    (X,Y)

TAB    n+1  (XN+1,YN+1)

9

2  (X2,Y2)    6

MaxN    10

(XMaxN,YMaxN)

F I G. 5

1

2

# F I G. 4A

30 "TAB" KEY ? — N → I

42 "BACK TAB" KEY ? — N → Ⓐ

31 $N \leftarrow N+1$

43 $N \leftarrow N-1$

32 $N : Max.N$ — > → 33 $N - I$

44 $N : I$ — < → 45 $N \leftarrow Max.N$

34 $X' \leftarrow XN - X$

35 $X' : 0$

37 SETTING OF LEFT-HEADING ARROW KEY IN A NUMBER OF X' IN KEY BUFFER

36 SETTING OF RIGHT-HEADING ARROW KEY IN A NUMBER OF X' IN KEY BUFFER

38 $Y' \leftarrow YN - Y$

39 $Y' : 0$

41 SETTING OF UP-HEADING ARROW KEY IN A NUMBER OF Y' IN KEY BUFFER

40 SETTING OF DOWN-HEADING ARROW KEY IN A NUMBER OF Y' IN KEY BUFFER

Ⓐ

ORDINARY KEY INPUT PROCESSING

# F I G. 4B

23

| X | 231 | CURSOR |
|---|---|---|
| Y | | POSITION |

232
| N | CURRENT NUMBER WORK AREA |

233
| Max.N | NUMBER OF TAB CURSOR REGISTRATIONS |

234
| X1 | Y1 |
|---|---|
| X2 | Y2 |
| ⋮ | ⋮ |
| XN | YN |
| ⋮ | ⋮ |
| XMaxN | YMaxN |

TAB CURSOR REGISTRATION NUMBER

235
| k | WORK AREA |
| X' | |
| Y' | |

EP 0 367 290 A2

# F I G. 6

```
        ▽
         49
   "CTRL" KEY      N
   AND "T" KEY  ────────  Ⓐ
       ?
        Y

   ┌──────────────────┐
   │    k ← 1         │────── 50
   └──────────────────┘
            │
            ↓←──────────────────┐
   ┌──────────────────┐          │
   │ CURSOR MOVE BY ARROW │── 51  │
   │   KEY  (X, Y)       │        │
   └──────────────────┘          │
            │                     │
   ┌──────────────────┐          │
   │ TAB SETTING KEY INPUT │      │
   │ BY "CTRL" KEY AND    │── 52  │
   │ "O̅" KEY             │        │
   └──────────────────┘          │
            │                     │
   ┌──────────────────┐          │
   │  REGISTRATION     │          │
   │  IN TABLE         │── 53     │
   │   Xk ← X          │          │
   │   Yk ← Y          │          │
   └──────────────────┘          │
            │                     │
          COM-         54         │
    Y   PLETED ?                  │
  ◄───(OPERATION OF              │
       "ESC" KEY)                 │
            │N                    │
   ┌──────────────────┐          │
   │   k ← k + 1      │── 55 ─────┘
   └──────────────────┘
            │
   ┌──────────────────┐
   │   Max.N ← k      │── 56
   └──────────────────┘
            │
   ┌──────────────────┐
   │    N ← 0         │── 57
   └──────────────────┘
            │
            ↓←──────────  Ⓐ
   ┌──────────────────┐
   │  ORDINARY         │
   │  KEY INPUT        │
   │  PROCESSING       │
   └──────────────────┘
```

# F I G. 7

# F I G. 8

| TAB | A | B | C | - - - - - - - - - - - - - - - - - - - - - - - - - - - - - - - - |

⇩

AP ← | → | → | ↓ | ↓ | ↓ | A | B | C | - - - - - - - - - - - - - |

# F I G. 9

4′

D(MaxM) ——— 70 ——— I(1)
(DXMaxM,DYMaxM) (IX1, IY1) 71
D(1) ——— I(2)
(DX1, DY1) (IX2, IY2)

11

72
D(2) ——— I(N)
(DX2, DY2) (IXN, IYN) D(N+1) ——— 74 ——— I(MaxM)
(DXN+1,DYN+1) (IXMaxM, IYMaxM)

73
I(N+1)
D(N) ——— (IXN+1, IYN+1)
(DXN,DYN)

# FIG. 10A

```
                    ┌─────────────┐ 80
                   ╱   CURSOR     ╲         N
                  ╱    MOVE        ╲──────────(A)
                  ╲    KEY ?       ╱
                   ╲              ╱
                    └─────────────┘
                          │ Y
              ┌──────────────────────┐
              │ CHECK OF NEXT        │ 81
              │ CURSOR DESTINATION   │
              │ (X', Y')             │
              └──────────────────────┘
                          │
                    ┌──────────┐ 82
                    │  k ← 1   │
                    └──────────┘
                          │
                    ┌─────────────┐ 83
      (A)◄──────────╱  k : Max.M  ╲
              >      ╲            ╱
                      └─────────────┘
                          │ ≦
                    ┌─────────────┐ 84
         =    ╱ (X',Y'):(IXk,IYk) ╲
      ┌──────╱                     ╲
      │      ╲                     ╱
      │       └─────────────┘
      │            │ ╪
      │      ┌──────────┐ 85
      │      │ k ← k+1  │
      │      └──────────┘
      │
      │      ┌──────────┐ 86
      └─────►│  M ← k   │
             └──────────┘
                  │
             ┌──────────────┐ 87
             │ X' ← DXM - X │
             └──────────────┘
                  │
             ┌─────────────┐ 88
        <   ╱    X' : 0     ╲   >
    ┌──────╱                 ╲──────┐
    │      ╲                 ╱      │
    │       └─────────────┘         │
```

┌──────────────────────┐ 90          ┌──────────────────────┐ 89
│ SETTING OF LEFT-     │             │ SETTING OF RIGHT-    │
│ HEADING ARROW KEY    │             │ HEADING ARROW KEY    │
│ IN A NUMBER OF       │             │ IN A NUMBER OF       │
│ X' IN KEY BUFFER     │             │ X' IN KEY BUFFER     │
└──────────────────────┘             └──────────────────────┘

```
             ┌──────────────┐ 91
             │ Y' ← DYM - Y │
             └──────────────┘
                  │
             ┌─────────────┐ 92
        <   ╱    Y' : 0     ╲   >
    ┌──────╱                 ╲──────┐
    │      ╲                 ╱      │
    │       └─────────────┘         │
```

┌──────────────────────┐ 94          ┌──────────────────────┐ 93
│ SETTING OF UP-       │             │ SETTING OF DOWN-     │
│ HEADING ARROW KEY    │             │ HEADING ARROW KEY    │
│ IN A NUMBER OF       │             │ IN A NUMBER OF       │
│ Y' IN KEY BUFFER     │             │ Y' IN KEY BUFFER     │
└──────────────────────┘             └──────────────────────┘

```
                  │           (A)
             ┌──────────────┐
             │ ORDINARY     │
             │ KEY INPUT    │
             │ PROCESSING   │
             └──────────────┘
```

# F I G. IOB

231′       23

| X |
|---|
| Y |

CURSOR POSITION

232′

| M |
|---|

CURRENT NO. (WORK)

| Max.M |
|---|

NUMBER OF START/END
CURSOR REGISTRATIONS

233′       234′

START/END CURSOR
REGISTRATION TABLE

| IX1 | IY1 | DX1 | DY1 |
|---|---|---|---|
| IX2 | IY2 | DX2 | DY2 |
| ⋮ | ⋮ | ⋮ | ⋮ |
| IXN | IYN | DXN | DYN |
| ⋮ | ⋮ | ⋮ | ⋮ |
| IXMaxM | IYMaxM | DXMaxM | DYMaxM |
| | | | |

235′

| k |
|---|
| X′ |
| Y′ |

# F I G. II

F I G. 12

```
                    ┌─────────────────────┐
                    │  "CTRL" KEY AND      │  N      ┌───┐
                    ◇  "S"KEY?             ◇────────▶│ A │
                    └─────────────────────┘         └───┘
                             │ Y                    100
                    ┌─────────────────────┐
                    │      k ← I          │────── 101
                    └─────────────────────┘
                             │
                    ┌─────────────────────┐
                    │ MOVE OF CURSOR BY    │
                    │ ARROW  KEY          │────── 102
                    │    ( X , Y )        │
                    └─────────────────────┘
                             │
                    ┌─────────────────────┐
                    │ START CURSOR SETTING │
                    │ KEY INPUT BY "CTRL" KEY│──── 103
                    │ AND "I" KEY         │
                    └─────────────────────┘
                             │
                    ┌─────────────────────┐
                    │ REGISTRATION  IN TABLE│──── 104
                    │   IXk ← X           │
                    │   IYk ← Y           │
                    └─────────────────────┘
                             │
                    ┌─────────────────────┐
                    │ CURSOR MOVE  BY      │
                    │ ARROW  KEY          │────── 105
                    │    ( X , Y )        │
                    └─────────────────────┘
                             │
                    ┌─────────────────────┐
                    │ END CURSOR SETTING   │
                    │ KEY INPUT BY "CTRL" KEY│──── 106
                    │ AND "Ō" KEY         │
                    └─────────────────────┘
                             │
                    ┌─────────────────────┐
                    │ REGISTRATION  IN TABLE│──── 107
                    │   DXk ← X           │
                    │   DYk ← Y           │
                    └─────────────────────┘
                             │
          Y         ┌─────────────────────┐
    ◀───────────────◇  COMPLETED ?        ◇──── 108
    │               │ (OPERATION OF       │
    │               │ "ESC" KEY)          │
    │               └─────────────────────┘
    │                        │ N
    │               ┌─────────────────────┐
    │               │    k ← k + I        │──── 109
    │               └─────────────────────┘
    │
    ▼
┌─────────────────────┐
│   Max.M ← k         │──── 110
└─────────────────────┘
            │                      ┌───┐
            │◀─────────────────────│ A │
            ▼                      └───┘
┌─────────────────────┐
│ ORDINARY  KEY        │
│ INPUT  PROCESSING    │
└─────────────────────┘
```

EP 0 367 290 A2

F I G.  13

F I G. 14

AP

F I G. 15

# FIG. 16A

START

WAIT FOR
KEY INPUT

140
"CTRL" + "S"
KEYS ? ──Y──→ ①
│N

141
"CTRL" + "T"
KEYS ? ──Y──→ ②
│N

142
CURSOR
MOVE KEY ? ──Y──→ ③
│N

143
"TAB" KEY ? ──Y──→ ④
│N

144
"BACK TAB"
KEY ? ──Y──→ ⑤
│N

←────── Ⓐ

ORDINARY KEY
INPUT PROCESSING

END

# F I G. 16B

( I )

| k ← I | 101 |

| CURSOR MOVE BY<br>ARROW KEY<br>( X, Y ) | 102 |

| START CURSOR SETTING<br>KEY INPUT BY "CTRL"<br>KEY AND "I" KEY | 103 |

| REGISTRATION<br>IN TABLE<br>Xk ← X<br>Yk ← Y | 104 |

| CURSOR MOVE BY<br>ARROW KEY<br>( X, Y ) | 105 |

| END CURSOR SETTING<br>KEY INPUT BY "CTRL"<br>KEY AND "Ō" KEY | 106 |

| REGISTRATION<br>IN TABLE<br>Xk ← X<br>Yk ← Y | 107 |

COM-
PLETED ?
(OPERATION OF
"ESC" KEY)     108

Y

N

| k ← k + I | 109 |

| Max. M ← k | 110 |

( A )

# FIG. 16C

```
( 2 )
  │
  ▼
┌─────────────────┐
│   k ← 1         │────── 50
└─────────────────┘
  │
  ▼ ◄──────────────────────────────┐
┌─────────────────┐                 │
│ MOVE OF CURSOR  │                 │
│ BY ARROW KEY    │────── 51        │
│    (X, Y)       │                 │
└─────────────────┘                 │
  │                                 │
  ▼                                 │
┌─────────────────┐                 │
│ TAB CURSOR      │                 │
│ SETTING KEY     │                 │
│ INPUT BY "CTRL" │────── 52        │
│ KEY AND "I" KEY │                 │
└─────────────────┘                 │
  │                                 │
  ▼                                 │
┌─────────────────┐                 │
│  REGISTRATION   │                 │
│   IN TABLE      │────── 53        │
│   Xk ← X        │                 │
│   Yk ← Y        │                 │
└─────────────────┘                 │
  │                                 │
  ▼                                 │
   ╱◇╲                              │
  ╱COM-╲                            │
 ╱PLETED?╲  Y                       │
◄─(OPERATION OF─── 54               │
 ╲ "ESC" KEY)╱                      │
  ╲  ╱                              │
   ╲╱                               │
   │ N                              │
   ▼                                │
┌─────────────────┐                 │
│   k ← k+1       │────── 55        │
└─────────────────┘─────────────────┘
   │
   ▼
┌─────────────────┐
│  Max.N ← k      │────── 56
└─────────────────┘
   │
   ▼
┌─────────────────┐
│   N ← 0         │────── 57
└─────────────────┘
   │
   ▼
 ( A )
```

FIG. 16D

(3)

CHECK OF NEXT CURSOR DESTINATION (X', Y') —— 81

k ← 1 —— 82

k : Max.M —— 83

> → (A)

≦

(X',Y') : (IXk, IYk) —— 84

= →

≠

k ← k + 1 —— 85

M ← k —— 86

X' ← DXM − X —— 87

X' : 0 —— 88

< →

SETTING OF LEFT-HEADING ARROW KEY IN A NUMBER OF X' IN KEY BUFFER —— 70

> →

SETTING OF RIGHT-HEADING ARROW KEY IN A NUMBER OF X' IN KEY BUFFER —— 89

=

Y' ← DYM − Y —— 91

Y' : 0 —— 92

< →

SETTING OF UP-HEADING ARROW KEY IN A NUMBER OF Y' IN KEY BUFFER —— 94

> →

SETTING OF DOWN HEADING ARROW KEY IN A NUMBER OF Y' IN KEY BUFFER —— 93

=

(A)

# F I G. 16E

```
        (4)                                    (5)

   ┌──────────────┐  ╱31              ┌──────────────┐  ╱43
   │  N ← N + 1   │                   │  N ← N - 1   │
   └──────────────┘                   └──────────────┘

          ╱32                                  ╱44
         ◇ N : Max.N ◇ ──>── 33               ◇ N : 1 ◇ ──<── 45
                      ┌──────────┐                     ┌──────────────┐
            ≦         │  N ← 1   │            ≧         │  N ← Max.N   │
                      └──────────┘                      └──────────────┘
```

```
   ┌──────────────┐  ╱34
   │  X' ← XN - X │
   └──────────────┘

          ╱35
    37   ◇ X' : 0 ◇    36
   <                    >
┌────────────────────┐    ┌────────────────────┐
│SETTING OF LEFT-    │    │SETTING OF RIGHT-   │
│HEADING ARROW       │ =  │HEADING ARROW       │
│KEY IN A NUMBER     │    │KEY IN A NUMBER     │
│OF  X'  IN KEY      │    │OF  X'  IN  KEY     │
│BUFFER              │    │BUFFER              │
└────────────────────┘    └────────────────────┘

   ┌──────────────┐  ╱38
   │  Y' ← YN - Y │
   └──────────────┘

          ╱39
    41   ◇ Y' : 0 ◇    40
   <                    >
┌────────────────────┐    ┌────────────────────┐
│SETTING OF UP-      │    │SETTING OF DOWN-    │
│HEADING ARROW       │ =  │HEADING ARROW       │
│KEY IN A NUMBER     │    │KEY IN A NUMBER     │
│OF  Y'  IN KEY      │    │OF  Y'  IN  KEY     │
│BUFFER              │    │BUFFER              │
└────────────────────┘    └────────────────────┘

              (A)
```

F I G. 17

F I G. 18

# F I G. 19

SELECTOR — 161

MOVE COMMAND — 162

163 — CURSOR MOVE CIRCUIT

164 — CURSOR MOVE CONTROL CHARACTER MOVING CIRCUIT

3 — DISPLAY

MEMORY — 165

EP 0 367 290 A2

# F I G. 20

```
                    ( START )
                        │
       177              ▼
          ◇ CURSOR  MOVE ◇──N──►( A )
            COMMAND
               ?
               │Y
               ▼
       178  ┌─────────────────────┐
            │CALCULATION OF NEXT  │
            │CURSOR DISPLAY       │
            │POSITION             │
            │(X,Y)                │
            └─────────────────────┘
                     │
       179           ▼
          ◇  X = XI   AND ◇──Y──────────────┐        181
             Y = YI  ?                       │  ┌───────────────┐
               │N                            │  │ALTERATION OF  │
       180     ▼                             └─►│CURSOR DISPLAY │
    ┌──Y──◇ X = X2  AND ◇                       │POSITION       │
    │        Y = Y2  ?                          │  X ← X2       │
    │          │N                               │  Y ← Y2       │
    │          │                                └───────┬───────┘
    ▼          │                                        │
┌──────────┐   │                                        │
│ALTERATION│   │◄───────────────────────────────────────┘
│OF CURSOR │   │
│DISPLAY   │   │
│POSITION  │   │
│  X ← XI  │   │
│  Y ← YI  │   │
└─────┬────┘   │
      │        │
  182 │        │
      └────────►
               │
               ▼
       ┌──────────────────┐   183
       │ MOVE  OF CURSOR TO│
       │      (X,Y)        │
       └────────┬──────────┘
                │◄────( A )
                ▼
             ( END )
```

F I G.  21

195  196

197  198  194

F I G.  22

200  202

201  199

F I G.  23

204

206  207

203  DOCUMENT
(WORDS)

205

208  209

# FIG. 24

| HARDWARE |
| OS |
| TRANSLATION PROCESSING |
| AP |

# FIG. 25

| HARDWARE |
| OS |
| TRANSLATION PROCESSING |
| AP |

# FIG. 26

# FIG. 27